(19) Europäisches Patentamt
European Patent Office
Office européen des brevets

(11) EP 3 083 743 B1

(12) EUROPÄISCHE PATENTSCHRIFT

(45) Veröffentlichungstag und Bekanntmachung des Hinweises auf die Patenterteilung:
**21.02.2018 Patentblatt 2018/08**

(21) Anmeldenummer: **14828151.2**

(22) Anmeldetag: **17.12.2014**

(51) Int Cl.:
***C08G 18/68*** (2006.01) ***C08G 18/71*** (2006.01)
***C08G 63/52*** (2006.01) ***C08G 63/54*** (2006.01)
***C08G 63/56*** (2006.01) ***C08G 63/58*** (2006.01)
***C08G 63/91*** (2006.01)

(86) Internationale Anmeldenummer:
**PCT/EP2014/078249**

(87) Internationale Veröffentlichungsnummer:
**WO 2015/091663 (25.06.2015 Gazette 2015/25)**

# (54) HAFTVERMITTLER FÜR LÖSEMITTELBASIERTE KLARLACKE

ADHESION PROMOTER FOR SOLVENT-BASED CLEAR COATINGS

AGENT ADHÉSIF POUR VERNIS TRANSPARENT SUR BASE SOLVANTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2013 EP 13197704**

(43) Veröffentlichungstag der Anmeldung:
**26.10.2016 Patentblatt 2016/43**

(73) Patentinhaber: **BASF Coatings GmbH**
**48165 Münster (DE)**

(72) Erfinder:
- **ANDERSEN, Audrée**
  **48329 Havixbeck (DE)**
- **FEIGL, Andreas**
  **48317 Drensteinfurt (DE)**
- **CORTEN, Cathrin**
  **59423 Unna (DE)**
- **RAKA, Fatmir**
  **48149 Münster (DE)**
- **NIEMEIER, Manuela**
  **48317 Drensteinfurt (DE)**
- **FREITAG, Nicole**
  **48163 Münster (DE)**
- **BOSHE-PLOIS, Stefanie**
  **48607 Ochtrup (DE)**
- **WEIHER, Christian**
  **48165 Münster (DE)**

(74) Vertreter: **BASF IP Association**
**BASF SE**
**G-FLP-C006**
**67056 Ludwigshafen (DE)**

(56) Entgegenhaltungen:
**EP-A1- 1 995 261** **US-A1- 2012 045 632**

EP 3 083 743 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft einen lösemittelbasierten Klarlack. Sie betrifft weiterhin ein Verfahren zur Herstellung einer Mehrschichtlackierung auf einem Substrat sowie entsprechende Mehrschichtlackierungen auf einem Substrat. Schließlich betrifft die vorliegende Erfindung eine Verwendung von entsprechenden Additiven zur Haftungsverbesserung in einem lösemittelbasierten Klarlack.

## Stand der Technik

Bei einer typischen Mehrschichtlackierung in der Automobilserienlackierung ist auf ein mit einer Elektrotauchlackierung beschichtetem Substrat eine Füllerschicht, eine Basislackschicht und eine Klarlackschicht aufgebracht. Als Klarlacke können beispielsweise 2-Komponentenklarlacke (2K-Klarlacke) eingesetzt werden. Bei einem Klarlack handelt es sich um einen Beschichtungsstoff, der nach Applikation und Härtung eine transparente Beschichtung (die Klarlackschicht) mit schützenden und/oder dekorativen Eigenschaften bildet. Unter schützenden Eigenschaften sind beispielsweise Kratzfestigkeit und Witterungsbeständigkeit, insbesondere UV-Beständigkeit, zu verstehen. Als dekorative Eigenschaft ist beispielsweise ein guter Glanz zu verstehen. In der Automobilserienlackierung kann es zum Überbrennen, der resultierenden Mehrschichtlackierung kommen. Unter dem Begriff Überbrennen ist die Schädigung der Lackoberfläche durch lokale Überhitzung zu verstehen. Durch das Überbrennen verschlechtern sich insbesondere die Haftungseigenschaften der resultierenden Klarlackoberfläche beispielsweise für den Fall der Reparaturlackierung oder der Scheibenverklebung. US2012/0045632 A1 offenbart Lösemittelbasierten Klarlacke, die verbesserte Haftungseigenschaften zur Glasscheibe aufweisen (Absätze [0001] und [0024]).

## Aufgabenstellung

Der vorliegenden Erfindung lag daher die Aufgabe zu Grunde, die Haftungseigenschaften einer überbrannten Klarlackschicht zu verbessern. Eine Verbesserung der Haftungseigenschaften soll insbesondere für die Reparaturlackierung oder die Scheibenverklebung, aber auch für die Haftung diverser weiterer Komponenten wie beispielsweise Acrylat-Klebeband für die Anbringung von Zierleisten oder Typenschildern erzielt werden. Dabei soll zudem die Grundrezeptur eines herkömmlichen Klarlacksystems so wenig wie möglich verändert werden. Des Weiteren sollen die schützenden und dekorativen Eigenschaften des Klarlacks dadurch nicht beeinträchtigt werden.

## Erfindungsgemäße Lösung

Diese Aufgabe wurde überraschenderweise durch einen lösemittelbasierten Klarlack gelöst, welcher dadurch gekennzeichnet ist, dass dieser mindestens ein Additiv enthält, welches herstellbar ist durch die Umsetzung von

(a) mindestens einem alpha,omega-hydroxyfunktionalisierten Oligoester, welcher eine OH-Zahl von 30 bis 160 mg KOH/g, einen theoretischen Kohlenstoff-Kohlenstoff-Doppelbindungsgehalt von 1 bis 2,5 mmol/g, ein zahlenmittleres Molekulargewicht von 1000 bis 3000 g/mol und ein gewichtsmittleres Molekulargewicht von 2800 bis 10000 g/mol besitzt, und

(b) mindestens einem Alkoxysilan der Strukturformel (II)

$$A\text{-}R\text{-}Si(R')_x(OR'')_{3-x}$$

wobei

- es sich bei A um eine OH-reaktive funktionelle Gruppe handelt,
- es sich bei R um einen aliphatischen Rest mit 2 bis 12 Kohlenstoffatomen, einen cycloaliphatischen Rest mit 3 bis 12 Kohlenstoffatomen, einen aromatischen Rest mit 6 bis 12 Kohlenstoffatomen oder einen araliphatischen Rest mit 7 bis 18 Kohlenstoffatomen handelt,
- der Rest R' ausgewählt ist aus der Gruppe der $C_1$- bis $C_{12}$-Alkylreste,
- R" ein Methyl- oder Ethylrest ist, und
- x = 0 bis 2 beträgt,

mit der Maßgabe, dass mindestens 90 mol-% aller OH-Gruppen des alpha,omega-hydroxyfunktionalisierten Oligoesters mit einer OH-reaktiven funktionellen Gruppe A zur Reaktion worden sind,
und zudem die Summe über die gewichtsprozentualen Anteile aller erfindungsgemäßen Additive 0,5 bis 10 Gew.-%

bezogen auf die Gesamtmenge des lösemittelbasierten Klarlacks beträgt.

**Beschreibung des alpha,omega-hydroxyfunktionalisierten Oligoesters**

Der Begriff alpha,omega-hydroxyfunktionalisierter Oligoester bezeichnet einen Oligoester, an dessen entgegengesetzten Enden, welche mit alpha beziehungsweise omega bezeichnet werden, sich jeweils eine Hydroxylgruppe befindet. Hierunter ist zu verstehen, dass ein solcher Oligoester an beiden Enden durch jeweils eine Monomereinheit terminiert ist, welche jeweils genau eine Hydroxylgruppe trägt. Handelt es sich um einen verzweigten Oligoester, so bezeichnen alpha und omega die Enden der längsten Polymerkette im Monomer. Die Länge bemisst sich dabei an der Anzahl der eingebauten Monomere. Es ist weiterhin nicht ausgeschlossen, dass der alpha,omega-hydroxyfunktionalisierte Oligoester weitere Hydroxylgruppen besitzt. Es ist bevorzugt, dass der erfindungsgemäß einzusetzende alpha,omega-hydroxyfunktionalisierte Oligoester genau zwei Hydroxylgruppen besitzt, jeweils eine in alpha- und eine in omega-Position. Es ist besonders bevorzugt, dass der erfindungsgemäß einzusetzende alpha,omega-hydroxyfunktionalisierte Oligoester genau zwei Hydroxylgruppen besitzt, jeweils eine in alpha- und eine in omega-Position, und zudem linear ist.

Der erfindungsgemäß einzusetzende alpha,omega-hydroxyfunktionalisierte Oligoester besitzt bevorzugt ein OH-Zahl von 40 bis 160 mg KOH/g und besonders bevorzugt von 70 bis 150 mg KOH/g. Die OH-Zahl kann nach DIN 53240-2 (Datum: November 2007) wie folgt bestimmt werden. Die Die OH-Gruppen werden durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1g Substanz gebundenen Menge Essigsäure äquivalent ist.

Weiterhin besitzt der erfindungsgemäß einzusetzende alpha,omega-hydroxyfunktionalisierte Oligoester eine Säurezahl von bevorzugt 0 bis 10 mg KOH/g, besonders bevorzugt 0 bis 5 mg KOH/g und ganz besonders bevorzugt 0 bis 3 mg KOH/g. Die Bestimmung der Säurezahl erfolgt gemäß DIN EN ISO 2114 (Datum: Juni 2002). Dabei werden die in der Probe enthaltenden freien Säuren mit einer Kaliumhydroxid-Standardlösung in Anwesenheit eines Farbindikators titriert. Die Säurezahl entspricht der Masse an Kaliumhydroxid in mg, die zur Neutralisation von 1 g alpha,omega-hydroxyfunktionalisierten Oligoesters unter festgelegten Bedingungen erforderlich ist.

Der alpha,omega-hydroxyfunktionalisierte Oligoester besitzt weiterhin ein bevorzugtes zahlenmittleres Molekulargewicht von 1000 bis 2000 g/mol und besonders bevorzugt von 1200 bis 1800 g/mol sowie ein gewichtsmittleres Molekulargewicht von bevorzugt 3000 bis 8000 g/mol und besonders bevorzugt 3000 bis 6000 g/mol. Die Bestimmung des zahlenmittleren und des gewichtsmittleren Molekulargewichts erfolgt mittels Gelpermeationschromatographie mit Tetrahydrofuran als Elutionsmittel und unter Verwendung von Polystyrol-Standards und ist angelehnt an DIN 55672-1 (Datum: August 2007). Das Säulenmaterial besteht aus Styrol-Divinylbenzol-Copolymeren

Es ist erfindungswesentlich, dass der alpha,omega-hydroxyfunktionalisierte Oligoester einen theoretischen Kohlenstoff-Kohlenstoff-Doppelbindungsgehalt von 1 bis 2,5 mmol/g, bevorzugt von 1,5 bis 2 mmol/g und besonders bevorzugt von 1,6 bis 1,9 mmol/g besitzt. Unter dem theoretischen Kohlenstoff-Kohlenstoff-Doppelbindungsgehalt ist die Stoffmenge der Kohlenstoff-Kohlenstoff-Doppelbindungen in der Einheit mmol bezogen auf die Masse des alpha,omega-hydroxyfunktionalisierten Oligoesters in der Einheit Gramm zu verstehen. Der theoretische Kohlenstoff-Kohlenstoff-Doppelbindungsgehalt, in der unten dargestellten Formel als Doppelbindungsgehalt bezeichnet, wird wie folgt berechnet:

$$Doppelbindungsgehalt = \frac{Stoffmenge(Doppelbindungen)}{Masse(Oligoester)}.$$

Dabei bezeichnet der Ausdruck "Stoffmenge(Doppelbindungen)" die Stoffmenge der Kohlenstoff-Kohlenstoff-Doppelbindungen in der Einheit mmol und der Ausdruck "Masse(Oligoester)" die Masse des alpha,omega-hydroxyfunktionalisierten Oligoesters in der Einheit Gramm.

Die Masse des alpha,omega-hydroxyfunktionalisierten Oligoesters ist die Summe der zu seiner Herstellung eingesetzten Monomere abzüglich der Masse des dabei entstehenden Wassers, wobei von einem vollständigen Umsatz aller Anhydridbeziehungsweise Carbonsäuregruppen ausgegangen wird. Die Stoffmenge der Kohlenstoff-Kohlenstoff-Doppelbindungen ergibt sich aus der Stoffmenge der eingesetzten ungesättigten Monomere. Werden beispielsweise ausschließlich einfach ungesättigte Monomere, wie zum Beispiel Maleinsäureanhydrid, eingesetzt, so ist die Stoffmenge der Kohlenstoff-Kohlenstoff-Doppelbindungen gleich der Stoffmenge der eingesetzten ungesättigten Monomere. Werden beispielsweise zweifach ungesättigte Monomere eingesetzt, so ist die Stoffmenge der durch solche Monomere in den alpha,omega-hydroxyfunktionalisierten Oligoester eingeführten Kohlenstoff-Kohlenstoff-Doppelbindungen doppelt so groß wie die eingesetzte Stoffmenge des entsprechenden zweifach ungesättigten Monomers.

Der alpha,omega-hydroxyfunktionalisierte Oligoester lässt sich beispielsweise aus der Reaktion von Polycarbonsäuren mit Polyolen darstellen. Bevorzugt wird er aus Reaktion von Dicarbonsäuren sowie deren Anhydriden und Diolen, Triolen sowie monohydroxyfunktionellen Verbindungen hergestellt. Bevorzugt werden Diole eingesetzt.

Erfolgt die Herstellung des alpha,omega-hydroxyfunktionalisierten Oligoesters mit Dicarbonsäuren, so können grundsätzlich auch deren Anhydride eingesetzt werden. Im Folgenden ist der Begriff Dicarbonsäure daher so zu verstehen, dass ebenfalls das korrespondierende Anhydrid eingeschlossen ist. Es gehört zum allgemeinen Wissen des Durchschnittsfachmanns zu entscheiden, die entsprechenden Verbindungen entweder als Dicarbonsäure oder als Anhydrid einzusetzen.

**Dicarbonsäuren**

Bei den erfindungsgemäß einzusetzenden Dicarbonsäuren kann es sich um aromatische oder aliphatische Verbindungen handeln. Bei aliphatischen Verbindungen handelt es sich um solche, die keine aromatischen Gruppen, wie beispielsweise einen Benzolrest enthalten. Als aromatische Verbindung im Sinne der vorliegenden Verbindung werden all jene verstanden, die mindestens eine aromatische Gruppe, wie beispielsweise einen Benzolrest enthalten. Als Beispiel für eine aromatische Verbindung seien beispielsweise die dem Fachmann bekannten Konstitutionsisomere der Benzoldicarbonsäure sowie Terephthalsäureanhydrid genannt.

Bevorzugt sind aliphatische Dicarbonsäuren. Besonders bevorzugt sind die aliphatischen Dicarbonsäuren gesättigt oder einfach oder mehrfach ungesättigt. Ganz besonders bevorzugt handelt es sich um lineare aliphatische Dicarbonsäuren, die entweder gesättigt oder einfach oder mehrfach ungesättigt sind. Daneben können auch cycloaliphatische Dicarbonsäuren eingesetzt werden.

Es ist weiterhin bevorzugt, dass mindestens eine gesättigte und mindestens eine einfach oder mehrfach ungesättigte aliphatische Dicarbonsäure eingesetzt werden. Besonders bevorzugt werden mindestens eine gesättigte lineare aliphatische Dicarbonsäure und mindestens eine einfach oder mehrfach ungesättigte lineare aliphatische Dicarbonsäure eingesetzt. Besonders bevorzugt werden genau eine gesättigte und genau eine einfach oder mehrfach ungesättigte aliphatische Dicarbonsäure eingesetzt. Ganz besonders bevorzugt werden genau eine gesättigte lineare und genau eine einfach oder mehrfach ungesättigte lineare aliphatische Dicarbonsäure eingesetzt.

Bevorzugt beträgt das molare Verhältnis von gesättigten zu einfach und/oder mehrfach ungesättigten aliphatischen Dicarbonsäuren 0,5 : 1,5 bis 1,5 : 0,5, besonders bevorzugt 0,75 : 1,25 bis 1,25 : 0,75 und ganz besonders bevorzugt 0,9 : 1,1 bis 1,1 : 0,9. Die genannten Verhältnisse beziehen sich sowohl auf den Fall, dass mehr als eine gesättigte und/oder mehr als eine ungesättigte Dicarbonsäure eingesetzt werden, als auch auf den Fall, dass genau eine gesättigte und genau eine ungesättigte Dicarbonsäure eingesetzt werden.

Als gesättigte aliphatische Dicarbonsäuren werden bevorzugt solche mit 4 bis 18, besonders bevorzugt 6 bis 14 und ganz besonders bevorzugt 6 bis 10 Kohlenstoffatomen eingesetzt. Besonders bevorzugt handelt es sich hierbei um lineare gesättigte aliphatische Dicarbonsäuren.

Als einfach ungesättigte aliphatische Dicarbonsäuren werden bevorzugt solche mit 4 bis 10, besonders bevorzugt 4 bis 8 und ganz besonders bevorzugt 4 bis 6 Kohlenstoffatomen eingesetzt. Besonders bevorzugt handelt es sich hier um entsprechende ungesättigte lineare aliphatische Dicarbonsäuren. Als mehrfach ungesättigte aliphatische Dicarbonsäuren werden bevorzugt solche mit 6 bis 18, besonders bevorzugt 8 bis 16 und ganz besonders bevorzugt 10 bis 14 Kohlenstoffatomen eingesetzt. Besonders bevorzugt handelt es sich hier um entsprechende mehrfach ungesättigte lineare aliphatische Dicarbonsäuren.

Beispielsweise handelt es sich bei den gesättigten aliphatischen Dicarbonsäuren um Alkandisäuren. Bevorzugt werden gesättigte Alkandisäuren eingesetzt, welche 4 bis 18, besonders bevorzugt 6 bis 14 und ganz besonders bevorzugt 6 bis 10 Kohlenstoffatome enthalten. Besonders bevorzugt handelt es sich hier um gesättigte lineare Alkandisäuren welche 4 bis 18, besonders bevorzugt 6 bis 14 und ganz besonders bevorzugt 6 bis 10 Kohlenstoffatome enthalten. Geeignete Alkandisäuren sind zum Beispiel Bernsteinsäure, Glutarsäure, Adipinsäure, Pimelinsäure, Korksäure, Azelainsäure, Sebacinsäure, Undecandisäure, Dodecandisäure, Tridecandisäure, Tetradecandisäure und Hexadecandisäure sowie deren Anhydride, insoweit diese existieren.

Als einfach ungesättigte aliphatische Dicarbonsäuren können Alkendisäuren eingesetzt werden, welche 4 bis 10, besonders bevorzugt 4 bis 8 und ganz besonders bevorzugt 4 bis 6 Kohlenstoffatome enthalten. Bevorzugt handelt es sich hier um entsprechende einfach ungesättigte lineare Alkendisäuren. Eine geeignete einfach ungesättigte lineare Alkendisäuren ist beispielsweise Maleinsäure.

**Diole**

Bei den bevorzugt einzusetzenden Diolen kann es sich um aromatische oder aliphatische Verbindungen handeln. Bevorzugt sind aliphatische Diole. Besonders bevorzugt handelt es sich um lineare oder cyclische aliphatische Diole. Diese können sowohl gesättigt als auch einfach oder mehrfach ungesättigt sein. Bevorzugt handelt es sich um

gesättigte lineare oder gesättigte cyclische aliphatische Diole.

Es können beispielsweise gesättigte aliphatische Diole mit 4 bis 18, besonders bevorzugt 6 bis 14 und ganz besonders bevorzugt 6 bis 10 Kohlenstoffatomen eingesetzt werden. Bevorzugt handelt es sich hierbei um entsprechende gesättigte lineare oder gesättigte cyclische aliphatische Diole.

Bevorzugt werden gesättigte Alkandiole oder gesättigte Cycloalkandiole eingesetzt. Bei letztgenannten kann es sich um Monocycloalkandiole, Bicycloalkandiole oder Tricycloalkandiole handeln. Es können beispielsweise gesättigte Alkandiole mit 4 bis 18, besonders bevorzugt 6 bis 14 und ganz besonders bevorzugt 6 bis 10 Kohlenstoffatomen eingesetzt werden. Bevorzugt handelt es sich hier um entsprechende gesättigte lineare Alkandiole. Geeignete gesättigte Alkandiole sind zum Beispiel 1,4-Butandiol und 1,6-Hexandiol.

Ebenso können bevorzugt gesättigte cyclische aliphatische Diole mit 6 bis 18, besonders bevorzugt 6 bis 14 und ganz besonders bevorzugt 6 bis 10 Kohlenstoffatomen eingesetzt werden.

Es können bevorzugt gesättigte Cycloalkandiole mit 6 bis 18, besonders bevorzugt 6 bis 14 und ganz besonders bevorzugt 6 bis 10 Kohlenstoffatomen eingesetzt werden. Ganz besonders bevorzugt einzusetzende gesättigte Cyclolakandiole sind Tricyclodecandiol, Cyclohexyldimethanol und Tetramethylcyclobutandiol.

Zur Herstellung des alpha,omega-hydroxyfunktionalisierten Oligoesters wird ein Überschuss an Diolen eingesetzt. Das molare Verhältnis von Dicarbonsäuren zu den Diolen ist dann beispielsweise n : (n + 1,1) bis n : (n + 2), bevorzugt n : (n + 1,2) bis n : (n + 1,8), besonders bevorzugt n : (n + 1,3) bis n : (n + 1,6) und ganz besonders bevorzugt n : (n + 1,3) bis n : (n + 1,5), wobei n die Stoffmenge der Dicarbonsäure bezeichnet.

Die Herstellung des alpha,omega-hydroxyfunktionalisierten Oligoesters erfolgt in einer dem Fachmann geläufigen Art und Weise. Um eine quantitative Umsetzung der eingesetzten Edukte zu erzielen, muss das bei der Reaktion entstehende Wasser aus dem chemischen Gleichgewicht entzogen werden. Dies geschieht vornehmlich durch den Einsatz eines Wasserabscheiders. Der alpha,omega-hydroxyfunktionalisierte Oligoester ist folglich ein Polykondensationsprodukt. Demnach handelt es sich bei dem alpha,omega-hydroxyfunktionalisierten Oligoester um ein Gemisch aus entsprechenden Oligoestern unterschiedlicher Kettenlänge.

In einer bevorzugten Ausführungsform des erfindungsgemäß einzusetzenden alpha,omega-hydroxyfunktionalisierten Oligoesters wird zu dessen Herstellung mindestens eine gesättigte lineare aliphatische Dicarbonsäure, mindestens eine einfach ungesättigte lineare aliphatische Dicarbonsäure und mindestens ein gesättigtes aliphatisches Diol eingesetzt. Bevorzugt handelt es sich bei der einzusetzenden gesättigten linearen aliphatischen Dicarbonsäure um eine lineare Alkandisäure mit 4 bis 18, besonders bevorzugt 6 bis 14 und ganz besonders bevorzugt 6 bis 10 Kohlenstoffatomen. Bei der einfach ungesättigten linearen Dicarbonsäure handelt es sich bevorzugt um eine einfach ungesättigte lineare Alkendisäure mit 4 bis 10, besonders bevorzugt 4 bis 8 und ganz besonders bevorzugt 4 bis 6 Kohlenstoffatomen. Bei dem gesättigten aliphatischen Diol handelt es sich bevorzugt um gesättigte lineare Alkandiole mit 4 bis 18, besonders bevorzugt 6 bis 14 und ganz besonders bevorzugt 6 bis 10 Kohlenstoffatomen oder ebenfalls bevorzugt um gesättigte Cycloalkandiole mit 6 bis 18, besonders bevorzugt 6 bis 14 und ganz besonders bevorzugt 6 bis 10 Kohlenstoffatomen.

Darüber hinaus lassen sich bei der Herstellung des alpha,omega-hydroxyfunktionalisierten Oligoesters natürlich auch Triole und monohydroxyfunktionelle Verbindungen einsetzen. Beispielsweise können aliphatische Triole sowie aliphatische monohydroxyfunktionelle Verbindungen eingesetzt werden. Bevorzugt handelt es sich dabei um entsprechende aliphatische Kohlenwasserstoffverbindungen. Als Beispiel für ein Triol sei Trimethylolpropan genannt. Als monohydroxyfunktionelle Verbindungen kann beispielsweise Dodecanol eingesetzt werden.

In einer weiteren bevorzugten Ausführungsform besitzt der alpha,omega-hydroxyfunktionalisierte Oligoester die folgende Strukturformel (I):

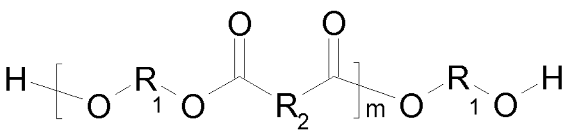

(I)

wobei

- die Reste $R_1$ unabhängig voneinander ausgewählt sind aus der Gruppe der linearen oder cyclischen Alkylenreste,
- die Reste $R_2$ unabhängig voneinander ausgewählt sind aus der Gruppe der Alkylen- oder Alkenylenreste, wobei das Verhältnis von Alkylen- zu Alkenylenresten gerade so gewählt ist, dass der alpha,omega-hydroxyfunktionalisierte Oligoester der Strukturformel (I) einen theoretischen Kohlenstoff-Kohlenstoff-Doppelbindungsgehalt von 1 bis 2,5 mmol/g besitzt, und
- der Index m so gewählt ist, dass das zahlenmittlere Molekulargewicht des alpha,omega-hydroxyfunktionalisierten Oligoesters der Strukturformel (I) 1000 bis 3000 g/mol beträgt.

Bei dem Index m in der Strukturformel (I) handelt es sich um eine ganze Zahl, welche größer als Null ist.

Die Voraussetzung, dass der Index m so gewählt werde, dass das zahlenmittlere Molekulargewicht des alpha,omega-hydroxyfunktionalisierten Oligoesters der Strukturformel (I) 1000 bis 3000 g/mol betrage sei im Folgenden erklärt. Es soll angenommen werden, dass es sich bei allen (m + 1) Resten $R_1$ um einen Hexamethylenrest und bei der Hälfte aller m Reste $R_2$ jeweils um einen Tetramethylenrest und bei der anderen Hälfte jeweils um einen Rest der Formel - CH=CH- handelt. Beträgt das zahlenmittlere Molekulargewicht beispielsweise 1500 g/mol, so liegt m im Mittel zwischen 6 und 7.

Das zahlenmittlere Molekulargewicht des alpha,omega-hydroxyfunktionalisierten Oligoesters der Strukturformel (I) beträgt bevorzugt 1000 bis 2000 g/mol und besonders bevorzugt 1200 bis 1800 g/mol.

Das gewichtsmittlere Molekulargewicht des alpha,omega-hydroxyfunktionalisierten Oligoesters der Strukturformel (I) beträgt bevorzugt 3000 bis 8000 g/mol und besonders bevorzugt 3000 bis 6000 g/mol.

Der alpha,omega-hydroxyfunktionalisierte Oligoester der Strukturformel (I) besitzt bevorzugt eine OH-Zahl von 40 bis 160 mg KOH/g und besonders bevorzugt von 70 bis 150 mg KOH/g.

Der alpha,omega-hydroxyfunktionalisierte Oligoester der Strukturformel (I) besitz bevorzugt einen theoretischen Kohlenstoff-Kohlenstoff-Doppelbindungsgehalt von 1,5 bis 2 mmol/g und besonders bevorzugt von 1,6 bis 1,9 mmol/g.

Der alpha,omega-hydroxyfunktionalisierte Oligoester der Strukturformel (I) besitzt bevorzugt eine Säurezahl von 0 bis 10 mg KOH/g, besonders bevorzugt von 0 bis 5 mg KOH/g und ganz besonders bevorzugt von 0 bis 3 mg KOH/g. Theoretisch beträgt die Säurezahl des alpha,omega-hydroxyfunktionalisierten Oligoesters der Strukturformel (I) 0 mg KOH/g. Wird dieser aus entsprechenden Diolen sowie entsprechenden Dicarbonsäuren beziehungsweise deren Anhydriden hergestellt, so ist es grundsätzlich möglich, dass Carbonsäuregruppe vorliegen, welche nicht mit einem entsprechenden Diol reagiert haben. In einem solchen Fall, hätte das resultierende Produktgemisch eine Säurezahl von > 0 mg KOH/g. Gemäß den oben genannten Bereichen für die Säurezahl ist es bevorzugt, wenn das resultierende Reaktionsgemisch möglichst wenig Carbonsäuregruppen besitzt.

Die Reste $R^1$ sind unabhängig voneinander ausgewählt aus der Gruppe der linearen oder cyclischen Alkylenreste. Ist mehr als eine Art von Resten $R_1$ im alpha,omega-hydroxyfunktionalisierten Oligoester der Strukturformel (I) vorhanden, so ist deren Anordnung statistisch. Im Fall eines linearen Alkylenrestes enthält dieser bevorzugt 4 bis 18, besonders bevorzugt 6 bis 14 und ganz besonders bevorzugt 6 bis 10 Kohlenstoffatome. Ganz besonders bevorzugt handelt es sich hier um einen Hexamethylenrest. Im Falle eines cyclischen Alkylenrests enthält dieser bevorzugt 6 bis 18, besonders bevorzugt 6 bis 14 und ganz besonders bevorzugt 6 bis 10 Kohlenstoffatome. Ganz besonders bevorzugt handelt es sich hier um einen Tricyclodecanrest.

Die Reste $R_2$ sind unabhängig voneinander ausgewählt aus der Gruppe der Alkylen- oder Alkenylenreste, wobei das Verhältnis von Alkylen- zu Alkenylenresten gerade so gewählt ist, dass der alpha,omega-hydroxyfunktionalisierte Oligoester der Strukturformel (I) einen theoretischen Kohlenstoff-Kohlenstoff-Doppelbindungsgehalt von 1 bis 2,5 mmol/g, bevorzugt von 1,5 bis 2 mmol/g und ganz besonders bevorzugt von 1,6 bis 1,9 mmol/g besitzt. Die Anordnung der unterschiedlichen Arten von Resten $R_2$ im alpha,omega-hydroxyfunktionalisierten Oligoester der Strukturformel (I) ist statistisch.

Bei $R_2$ handelt es sich bevorzugt entweder um einen linearen Alkylen- oder einen linearen Alkenylenrest. Es ist ebenfalls bevorzugt, dass das molare Verhältnis zwischen den Alkylen- und den Alkenylenresten 0,5 : 1,5 bis 1,5 : 0,5, besonders bevorzugt 0,75 : 1,25 bis 1,25 zu 0,75 und ganz besonders bevorzugt 0,9 : 1,1 bis 1,1 : 0,9 beträgt.

Ist $R_2$ ein linearer Alkylenrest, so enthält dieser bevorzugt 2 bis 16, besonders bevorzugt 4 bis 12 uns ganz besonders bevorzugt 4 bis 8 Kohlenstoffatome. Beispielsweise handelt es sich um einen Tetramethylenrest.

$R_2$ kann weiterhin ein linearer Alkenylenrest sein. Bevorzugt handelt es sich um einen einfach ungesättigten linearen Alkenylenrest, welcher bevorzugt 2 bis 8, besonders bevorzugt 2 bis 6 und ganz besonders bevorzugt 2 bis 4 Kohlenstoffatome enthält. Ganz besonders bevorzugt handelt es sich um einen Alkenylenrest der Struktur -CH=CH-.

**Beschreibung des Alkoxysilans der Strukturformel (II)**

Unter einem aliphatischen Rest R ist ein organischer Rest zu verstehen, welcher keine aromatischen Gruppen wie beispielsweise einen Phenylrest besitzt. Der aliphatische Rest R kann 2 bis 12 Kohlenstoffatome aufweisen. Unter einem cycloaliphatischen Rest R ist ein organischer Rest zu verstehen, welcher keine aromatischen Gruppen wie beispielsweise einen Phenylrest besitzt. Der cycloaliphatische Rest R kann 3 bis 12 Kohlenstoffatome aufweisen wie beispielsweise im Fall von Cyclopropyl oder Cyclohexyl. Unter einem aromatischen Rest R ist ein organischer Rest zu verstehen, welcher aus aromatischen Gruppen aufgebaut ist, wie beispielsweise einen Phenylen-Rest. Der aromatische Rest R kann 6 bis 12 Kohlenstoffatome aufweisen. Unter einem araliphatischen Rest R ist ein organischer Rest zu verstehen, welcher sowohl aromatische Gruppen als auch aliphatische Gruppen aufweist. Der araliphatische Rest R kann 7 bis 18 Kohlenstoffatome aufweisen. Ein Rest R wie ein aliphatischer Rest kann neben Kohlenstoff und Wasserstoff auch Heteroatome, wie Sauerstoff, Stickstoff oder Schwefel enthalten. Daneben können ebenfalls weitere funktionelle

Gruppen wie Ester- oder Urethangruppen enthalten sein. Des Weiteren kann der Rest R ebenfalls Alken- oder Alkingruppen enthalten. Er kann ebenfalls mehrfach ungesättigt sein beziehungsweise mehr als eine Alkingruppe enthalten. Es handelt sich bei R besonders bevorzugt um einen aliphatischen Rest mit 2 bis 12 Kohlenstoffatomen oder mit 2 bis 10 Kohlenstoffatomen, ganz besonders bevorzugt 2 bis 8 Kohlenstoffatomen und ganz insbesondere 2 bis 6 Kohlenstoffatomen. Dem Fachmann ist klar, dass es sich bei dem Rest R um einen zweibindigen Rest handelt.

Bei dem Rest R' handelt es sich bevorzugt um einen $C_2$- bis $C_{10}$-Alkylenrest, besonders bevorzugt um einen $C_2$- bis $C_8$-Alkylenrest und ganz besonders bevorzugt um einen $C_3$- bis $C_6$-Alkylenrest.

Bei der OH-reaktiven funktionellen Gruppe A handelt es sich bevorzugt um eine Isocyanatgruppe oder eine Epoxidgruppe. Besonders bevorzugt handelt es sich um eine Isocyanatgruppe.

Bevorzugt werden Alkoxysilane der allgemeinen Strukturformel (II.1) eingesetzt

$$OCN\text{-}R_1\text{-}Si(R')_x(OR'')_{3\text{-}x}$$

wobei

- $R_1$ ein $C_2$- bis $C_{12}$-Alkylenrest, ein $C_2$- bis $C_{12}$-Alkenylenrest, oder ein mehrfach ungesättigter $C_4$- bis $C_{12}$-Alkylenrest ist,
- der Rest R' ausgewählt ist aus der Gruppe der $C_1$- bis $C_{12}$-Alkylreste,
- R" ein Methyl- oder Ethylrest ist, und
- x = 0 bis 2 beträgt.

Bevorzugt handelt es sich bei $R_1$ um einen $C_2$- bis $C_{12}$-Alkylenrest oder sogar um einen $C_2$- bis $C_{10}$-Alkylenrest. Besonders bevorzugt handelt es sich um einen $C_2$- bis $C_8$-Alkylenrest und ganz besonders bevorzugt um einen $C_2$- bis $C_6$-Alkylenrest oder einen $C_3$-Alkylenrest. Betreffend den Rest R' sei auf die oben genannten bevorzugten, besonders bevorzugten und ganz besonders bevorzugten Merkmale verwiesen. Des Weiteren ist bevorzugt x = 0 oder 1 und ganz besonders bevorzugt x = 0.

Ebenfalls bevorzugt werden Alkoxysilane der allgemeinen Strukturformel (II.2) eingesetzt

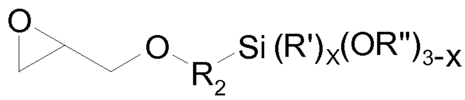

wobei

- $R_2$ ein $C_2$- bis $C_{10}$-Alkylenrest, ein $C_2$- bis $C_{10}$-Alkenylenrest, oder ein mehrfach ungesättigter $C_4$- bis $C_{10}$-Alkylenrest ist,
- der Rest R' ausgewählt ist aus der Gruppe der $C_1$- bis $C_{12}$-Alkylreste,
- R" ein Methyl- oder Ethylrest ist, und
- x = 0 bis 2 beträgt.

Bevorzugt handelt es sich bei $R_2$ um einen $C_2$- bis $C_{10}$-Alkylenrest oder sogar um einen $C_2$- bis $C_8$-Alkylenrest. Besonders bevorzugt handelt es sich um einen $C_2$- bis $C_6$-Alkylenrest und ganz besonders bevorzugt um einen $C_2$- bis $C_4$-Alkylenrest oder einen $C_3$-Alkylenrest. Betreffend den Rest R' sei auf die oben genannten bevorzugten, besonders bevorzugten und ganz besonders bevorzugten Merkmale verwiesen. Des Weiteren ist bevorzugt x = 0 oder 1 und ganz besonders bevorzugt x = 0.

Ebenfalls bevorzugt werden Alkoxysilane der allgemeinen Strukturformel (II.3) eingesetzt

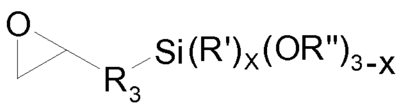

wobei

- $R_3$ ein $C_2$- bis $C_{12}$-Alkylenrest, ein $C_2$- bis $C_{12}$-Alkenylenrest, oder ein mehrfach ungesättigter $C_4$- bis $C_{12}$-Alkylenrest ist,
- der Rest R' ausgewählt ist aus der Gruppe der $C_1$- bis $C_{12}$-Alkylreste,

- R" ein Methyl- oder Ethylrest ist, und
- x = 0 bis 2 beträgt.

Bevorzugt handelt es sich bei $R_3$ um einen $C_2$- bis $C_{12}$-Alkylenrest oder sogar um einen $C_2$- bis $C_{10}$-Alkylenrest. Besonders bevorzugt handelt es sich um einen $C_2$- bis $C_8$-Alkylenrest und ganz besonders bevorzugt um einen $C_2$- bis $C_6$-Alkylenrest oder einen $C_3$-Alkylenrest. Betreffend den Rest R' sei auf die oben genannten bevorzugten, besonders bevorzugten und ganz besonders bevorzugten Merkmale verwiesen. Des Weiteren ist bevorzugt x = 0 oder 1 und ganz besonders bevorzugt x = 0.

**Herstellung des erfindungsgemäßen Additivs**

Das erfindungsgemäße Additiv wird beispielsweise durch Umsetzung mindestens eines alpha,omega-hydroxyfunktionalisierten Oligoesters mit mindestens einem Alkoxysilan der Strukturformel (II) hergestellt. Die Reaktion wird in organischen Lösemitteln durchgeführt. Als Lösemittel eignen sich alle dem Fachmann bekannten Lösemittel, welche kein aktives H-Atom aufweisen. Beispiele für geeignete Lösemittel sind Ester wie Butylacetat oder Naphtha. Gegebenenfalls kann die Umsetzung in Gegenwart wenigstens eines Wasserfängers wie beispielsweise Triethylorthoformiat durchgeführt werden. Bevorzugt wird dabei zunächst das Alkoxysilan der Strukturformel (II) vorgelegt und anschließend der alpha,omega-hydroxyfunktionalisierte Oligoester hinzugetropft. Handelt es sich bei A um eine Isocyanatgruppe, so kann die Menge an noch vorhandenen Isocyanatgruppen in der Reaktionslösung titrimetrisch bestimmt werden, beispielsweise gemäß DIN EN ISO 11909 (Datum: Mai 2007). Handelt es sich bei A um eine Epoxidgruppe, so kann die Menge an noch vorhandenen Epoxidgruppen in der Reaktionslösung titrimetrisch bestimmt werden, beispielsweise gemäß DIN EN ISO 3001 (Datum: November 1999).

In einer besonders bevorzugten Ausführungsform des erfindungsgemäßen Additivs wird dieses durch die Umsetzung mindestens eines alpha,omega-hydroxyfunktionalisierten Oligoesters der Strukturformel (I) mit mindestens einem Alkoxysilan der Strukturformel (II.1) hergestellt.

Weitere besonders bevorzugte Ausführungsformen des erfindungsgemäßen Additivs werden im Folgenden genannt:

a) In einer besonders bevorzugten Ausführungsform des erfindungsgemäßen Additivs besitzt der alpha,omega-hydroxyfunktionalisierte Oligoester der Strukturformel (I) ein zahlenmittleres Molekulargewicht von 1200 bis 1800 g/mol besitzt.

b) In einer weiteren besonders bevorzugten Ausführungsform des erfindungsgemäßen Additivs besitzt der alpha,omega-hydroxyfunktionalisierten Oligoester der Strukturformel (I) ein gewichtsmittleres Molekulargewicht von 3000 bis 6000 g/mol.

c) In einer weiteren besonders bevorzugten Ausführungsform des erfindungsgemäßen Additivs besitzt der alpha,omega-hydroxyfunktionalisierte Oligoester der Strukturformel (I) eine OH-Zahl von 70 bis 150 mg KOH/g.

d) In einer weiteren besonders bevorzugten Ausführungsform des erfindungsgemäßen Additivs besitzt der alpha,omega-hydroxyfunktionalisierte Oligoester der Strukturformel (I) einen theoretischen Kohlenstoff-Kohlenstoff-Doppelbindungsgehalt von 1,5 bis 2 mmol/g.

e) In einer weiteren besonders bevorzugten Ausführungsform des erfindungsgemäßen Additivs sind die Reste $R_1$ im alpha,omega-hydroxyfunktionalisierten Oligoester der Strukturformel (I) ausgewählt aus der Gruppe der linearen Alkylenreste mit 6 bis 10 Kohlenstoffatomen.

f) In einer weiteren besonders bevorzugten Ausführungsform des erfindungsgemäßen Additivs sind die Reste $R_2$ des alpha,omega-hydroxyfunktionalisierten Oligoesters der Strukturformel (I) ausgewählt aus der Gruppe der linearen Alkylenreste mit 4 bis 8 Kohlenstoffatomen oder der linearen Alkenylenreste mit 2 bis 4 Kohlenstoffatomen.

g) In einer weiteren besonders bevorzugten Ausführungsform des erfindungsgemäßen Additivs hinsichtlich des alpha,omega-hydroxyfunktionalisierten Oligoesters der Strukturformel (I) beträgt das molare Verhältnis zwischen den linearen Alkylen- und den linearen Alkenylenresten 0,9 : 1,1 bis 1,1 : 0,9.

h) In einer weiteren besonders bevorzugten Ausführungsform des erfindungsgemäßen Additivs handelt es sich bei dem Rest $R_1$ des Alkoxysilans der Strukturformel (II.1) um eine $C_2$- bis $C_6$-Alkylenrest.

i) In einer weiteren besonders bevorzugten Ausführungsform des erfindungsgemäßen Additivs beträgt x im Alkoxysilans der Strukturformel (II.1) Null.

j) In einer weiteren besonders bevorzugten Ausführungsform des erfindungsgemäßen Additivs werden mindestens 99 mol-% aller OH-Gruppen des alpha,omega-hydroxyfunktionalisierten Oligoesters mit einer OH-reaktiven funktionellen Gruppe A des erfindungsgemäßen Alkoxysilans zur Reaktion gebracht.

In einer ganz besonders bevorzugten Ausführungsform des erfindungsgemäßen alpha,omega-hydroxyfunktionalisierten Oligoesters sind alle die unter a) bis j) angegebenen Merkmale in Kombination realisiert.

**Beschreibung des lösemittelbasierten Klarlacks**

Es ist erfindungswesentlich, dass der lösemittelbasierte Klarlack mindestens ein erfindungsgemäßes Additiv enthält. Dabei beträgt die Summe über die gewichtsprozentualen Anteile aller erfindungsgemäßer Additive 0,5 bis 10 Gew.-% bezogen auf die Gesamtmenge des lösemittelbasierten Klarlacks. Bevorzugt beträgt die Summe über die gewichtsprozentualen Anteile aller erfindungsgemäßen Additive 1 bis 9 Gew.-%, besonders bevorzugt 1 bis 8 Gew.-% und ganz besonders bevorzugt 1,5 bis 7,5 Gew.-% oder sogar 1,5 bis 6,5 Gew.-% jeweils bezogen auf das Gesamtgewicht des Klarlacks. Wird die Untergrenze von 0,5 Gew.-% unterschritten, so wird die Haftung nicht verbessert. Wird die Obergrenze von 10 Gew.-% überschritten, so treten Nachteile wie beispielsweise eine Vergilbung der resultierenden Beschichtung auf.

In dem erfindungsgemäßen lösemittelbasierten Klarlack beträgt die Summe über die gewichtsprozentualen Anteile der erfindungsgemäßen Additive 0,5 bis 10 Gew.-% bezogen auf die Gesamtmenge des lösemittelbasierten Klarlacks. Für den Fall, dass bevorzugte Ausführungsformen der erfindungsgemäßen Additive eingesetzt werden, beträgt die Summe über die gewichtsprozentualen Anteile aller bevorzugten Ausführungsformen des Additivs bevorzugt ebenfalls 0,5 bis 10 Gew.-% bezogen auf die Gesamtmenge des lösemittelbasierten Klarlacks. Besonders bevorzugt enthält der erfindungsgemäße Klarlack als entsprechende Additive ausschließlich bevorzugte Ausführungsformen der Additive.

In einer bevorzugten Ausführungsform des erfindungsgemäßen lösemittelbasierten Klarlacks beträgt die Summe über die gewichtsprozentualen Anteile der erfindungsgemäßen Additive 1 bis 9 Gew.-% bezogen auf die Gesamtmenge des lösemittelbasierten Klarlacks. Für den Fall, dass bevorzugte Ausführungsformen der erfindungsgemäßen Additive eingesetzt werden, beträgt die Summe über die gewichtsprozentualen Anteile aller bevorzugten Ausführungsformen des Additivs bevorzugt ebenfalls 1 bis 9 Gew.-% bezogen auf die Gesamtmenge des lösemittelbasierten Klarlacks. Besonders bevorzugt enthält der erfindungsgemäße Klarlack als entsprechende Additive ausschließlich bevorzugte Ausführungsformen der Additive.

In einer besonders bevorzugten Ausführungsform des erfindungsgemäßen lösemittelbasierten Klarlacks beträgt die Summe über die gewichtsprozentualen Anteile der erfindungsgemäßen Additive 1 bis 8 Gew.-% bezogen auf die Gesamtmenge des lösemittelbasierten Klarlacks. Für den Fall, dass bevorzugte Ausführungsformen der erfindungsgemäßen Additive eingesetzt werden, beträgt die Summe über die gewichtsprozentualen Anteile aller bevorzugten Ausführungsformen des Additivs bevorzugt ebenfalls 1 bis 8 Gew.-% bezogen auf die Gesamtmenge des lösemittelbasierten Klarlacks. Besonders bevorzugt enthält der erfindungsgemäße Klarlack als entsprechende Additive ausschließlich bevorzugte Ausführungsformen der Additive.

In einer ganz besonders bevorzugten Ausführungsform des erfindungsgemäßen lösemittelbasierten Klarlacks beträgt die Summe über die gewichtsprozentualen Anteile der erfindungsgemäßen Additive 1,5 bis 7,5 Gew.-% bezogen auf die Gesamtmenge des lösemittelbasierten Klarlacks. Für den Fall, dass bevorzugte Ausführungsformen der erfindungsgemäßen Additive eingesetzt werden, beträgt die Summe über die gewichtsprozentualen Anteile aller bevorzugten Ausführungsformen des Additivs bevorzugt ebenfalls 1,5 bis 7,5 Gew.-% bezogen auf die Gesamtmenge des lösemittelbasierten Klarlacks. Besonders bevorzugt enthält der erfindungsgemäße Klarlack als entsprechende Additive ausschließlich bevorzugte Ausführungsformen der Additive.

In einer ebenfalls ganz besonders bevorzugten Ausführungsform des erfindungsgemäßen lösemittelbasierten Klarlacks beträgt die Summe über die gewichtsprozentualen Anteile der erfindungsgemäßen Additive 1,5 bis 6,5 Gew.-% bezogen auf die Gesamtmenge des lösemittelbasierten Klarlacks. Für den Fall, dass bevorzugte Ausführungsformen der erfindungsgemäßen Additive eingesetzt werden, beträgt die Summe über die gewichtsprozentualen Anteile aller bevorzugten Ausführungsformen des Additivs bevorzugt ebenfalls 1,5 bis 6,5 Gew.-% bezogen auf die Gesamtmenge des lösemittelbasierten Klarlacks. Besonders bevorzugt enthält der erfindungsgemäße Klarlacks als entsprechende Additive ausschließlich bevorzugte Ausführungsformen der Additive.

Als Beispiel für in diesem Sinne bevorzugte Ausführungsformen des erfindungsgemäßen Additivs sei ein solches genannt, welches durch die Umsetzung mindestens eines alpha,omega-hydroxyfunktionalisierten Oligoesters der Strukturformel (I) mit mindestens einem Alkoxysilan der Strukturformel (II.1) hergestellt wird.

Beispiele für in diesem Sinne bevorzugte Ausführungsformen des erfindungsgemäßen Additivs sind jene, welche bereits im Zusammenhang mit der Beschreibung des erfindungsgemäßen Additivs genannt wurden.

Es können die dem Fachmann geläufigen lösemittelbasierten Klarlacke eingesetzt werden. Der Klarlack enthält mindestens ein organisches Polymer als Bindemittel. Diese organischen Polymere sind beispielsweise die dem Fachmann bekannten Polyester- und/oder Polyacrylat- und Polymethacrylatharze (im Folgenden als Poly(meth)acrylatharze bezeichnet). Die genannten organischen Polymere enthalten vorzugsweise zusätzlich unterschiedliche funktionelle Gruppen zur chemischen Vernetzung, wobei Hydroxylgruppen bevorzugt sind. Als weitere zur chemischen Vernetzung bevorzugte Gruppe sind Carbamatgruppen zu nennen. Bevorzugt werden Polyester- und/oder Poly(meth)acrylatharze, welche bevorzugt Hydroxylgruppen enthalten, eingesetzt. Besonders bevorzugt sind Poly(meth)acrylatharze, welche bevorzugt Hydroxylgruppen enthalten.

Als Vernetzter können Aminoharze und Polyisocyanate eingesetzt werden. Als Aminoharze werden bevorzugt

Melaminharze eingesetzt.

Als Polyisocyanate kommen aliphatische und cycloaliphatische Polyisocyanate in Betracht. Isocyanate reagieren bereits bei Raumtemperatur mit Hydroxylgruppen. Es ist daher notwendig, den Klarlack, welcher beispielsweise ein hydroxyfunktionelles Polymer enthält, (Stammlack) und den Vernetzer (Härter) getrennt anzuliefern beziehungsweise herzustellen und erst kurz vor der Applikation miteinander zu mischen. Man spricht dann auch von einem 2K-Klarlack. Als Polyisocyanate werden beispielsweise Diisocyanate eingesetzt. Bevorzugte Diisocyanate sind Hexamethylendiisocyanat (HMDI), Isophorondiisocyanat (IPDI), Diphenylmethandiisocyanat (MDI) und Tetramethylxylyldiisocyanat (TMXDI). Des Weiteren werden ebenfalls Polyisocyanataddukte eingesetzt. Hierbei handelt es sich üblicherweise um Oligomere aus Diisocyanaten. Als hierzu geeignete Diisocyanate werden bevorzugt die oben bereits genannten eingesetzt. Die Verfahren zur Oligomerisierung bestehen in der Bildung verschiedener Addukte: Urethanen, Allophananten, Biuret, Uretdionen und bevorzugt Isocyanuraten. Besonders bevorzugt werden wegen ihrer Viskosität Isocyanurattrimere des Hexamethylendiisocyanats eingesetzt.

Grundsätzlich ist es auch möglich, verkappte Polyisocyanate einzusetzen. Verkappte Isocyanate werden in der Literatur teilweise auch als blockierte Polyisocyanate bezeichnet. Verkappte Isocyanate entstehen, wenn die freien Isocyanatgruppen von Polyisocyanaten mit H-reaktiven Verbindungen umgesetzt werden, deren Reaktion mit den Isocyanaten bei höherer Temperatur reversibel ist. Die verkappten Polyisocyanate reagieren bei Raumtemperatur nicht mit hydroxyfunktionellen Polymeren und können daher problemlos mit diesen gemischt werden. Man spricht in einem solchen Fall daher auch von 1K-Klarlacken. Grundsätzlich können alle oben bereits genannten Polyisocyanate eingesetzt werden. Als Verkappungsmittel eignen sich insbesondere epsilon-Caprolactam, 1,2,4-Triazol, Methylethylketoxim, 3,5-Dimethyl-1,2-pyrazol, Ethylacetoacetat oder Diethylmalonat.

Vorteilhafterweise liegt der Anteil aller filmbildenden Komponenten, bevorzugt des hydroxyfunktionellen Polyester- und/oder Poly(meth)acrylatharzes und der Vernetzer, bevorzugt Aminharze und Polyisocyanate, im Bereichen von 10 bis 90 Gew.-%, bevorzugt von 15 bis 60 Gew.-%, besonders bevorzugt im Bereich von 20 bis 50 Gew.-%, jeweils bezogen auf die Gesamtmenge des lösemittelbasierten Klarlacks. Der Anteil eines jeweils separat betrachteten Harzes sowie eines Vernetzers liegt vorteilhafterweise nicht unter 3 Gew.-%, bezogen auf die Gesamtmenge des lösemittelbasierten Klarlacks.

Üblicherweise ist es erforderlich, die Vernetzungsreaktion zu katalysieren. Dafür werden fast immer organische Zinnsalze verwendet. Im Sinne der vorliegenden Erfindung wird bevorzugt Dibutylzinndilaurat eingesetzt, da es aufgrund seines relativ langkettigen Säurerests besonders gut mit dem Bindemittel und dann später mit der Filmmatrix verträglich ist.

Des Weiteren enthält der erfindungsgemäße Klarlack organische Lösemittel. Enthalten sein können beispielsweise aliphatische und/oder aromatische Kohlenwasserstoffe wie Toluol, Xylol, Solventnaphtha, Solvesso 100, Shellsol A, Ketone, wie Aceton, Methylethylketon oder Methylamylketon, Ester, wie Ethylacetat, Butylacetat, Methoxypropylacetat, Butylglykolacetat , Pentylacetat oder Ethylethoxypropionat, Ether wie Butylglycol, Dipropylenglycolmethylether, Alkohole wie Ethylhexanol, Butoxypropanol, Isopropanol oder Butyldiglycol oder Mischungen aus den vorgenannten Lösemitteln.

Des Weiteren handelt es sich um einen lösemittelbasierten Klarlack. Unter dem Begriff "lösemittelbasiert" soll im Folgenden verstanden werden, dass als Lösemittel ausschließlich organische Lösemittel und kein Wasser eingesetzt wird. Insbesondere soll der Wassergehalt des erfindungsgemäßen lösemittelbasierten Klarlacks nicht größer als 5 Gew.-%, und ganz besonders nicht größer als 2 Gew.-% jeweils bezogen auf die Gesamtmenge des erfindungsgemäßen lösemittelbasierten Klarlacks betragen.

Weiterhin kann in dem Klarlack mindestens ein an sich bekanntes Lackadditiv enthalten sein. Solche Lackadditive sind beispielsweise, aber nicht ausschließlich,

- Verlaufsmittel,
- Lichtschutzmittel, und/oder
- rheologiesteuernde Additive, und/oder
- Katalysatoren.

**Beschreibung des erfindungsgemäßen Verfahrens**

Die vorliegende Erfindung betrifft weiterhin ein Verfahren zur Herstellung einer Mehrschichtlackierung auf einem Substrat umfassend

(A) Aufbringen eines Basislacks,
(B) Aufbringen eines erfindungsgemäßen lösemittelbasierten Klarlacks,
(C) Gemeinsames Härten des Basislacks und des Klarlacks.

Alle oben hinsichtlich des erfindungsgemäßen lösemittelbasierten Klarlacks bereits diskutierten besonderen Merkmale sind ebenfalls für das in Rede stehende erfindungsgemäße Verfahren bevorzugt.

Unter dem Begriff "Härten" ist die thermische Härtung zu verstehen. Im Rahmen der vorliegenden Erfindung bedeutet der Begriff "thermische Härtung" die durch Wärme initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Unter welchen Bedingungen die thermische Härtung erfolgen kann wird weiter unten im Text für die jeweiligen Schichten beschrieben. Ferner sei darauf hingewiesen, dass unter dem Begriff "Trocknen" die Abgabe von Lösemitteln zu verstehen ist.

Dieses Verfahren wird bevorzugt in der Automobilserienlackierung eingesetzt. Geeignete Substrate sind daher insbesondere Metallsubstrate. Metallsubstrate sind alle dem Fachmann geläufigen wie beispielsweise Aluminium, Eisen, Zink und Magnesium sowie deren Legierungen. Besonders bevorzugt sind Substrate aus Aluminium oder Stahl. Alternativ können auch nicht-metallische Substrate wie Kunststoffe oder Composite-Materialien eingesetzt werden.

Bevorzugt können die Substrate zudem mit einer Elektrotauchlackierung sowie einer Füllerschicht versehen sein. Elektrotauchlacke werden beispielsweise im Römpp-Lexikon Lacke und Druckfarben, Georg Thieme Verlag, Stuttgart, New York, 1998, Seite 189, beschrieben. Füller werden beispielsweise im Römpp-Lexikon Lacke und Druckfarben, Georg Thieme Verlag, Stuttgart, New York, 1998, Seiten 249 bis 250, beschrieben.

**Basislack**

Das vorliegende Verfahren wird bevorzugt in der Automobilserienlackierung eingesetzt. Es werden die üblichen, dem Fachmann bekannten Basislacke eingesetzt. Es können sowohl lösemittelbasierte, als auch wässrige Basislacke eingesetzt werden.

Die lösemittelbasierten Basislacke enthalten bevorzugt Celluloseacetobutyrat sowie Polyester- und/oder Polyacrylat- und Polymethacrylatharze (im Folgenden als Poly(meth)acrylatharze bezeichnet). Die Polyester- und oder Poly(meth)acrylatharze enthalten vorzugsweise zusätzlich unterschiedliche funktionelle Gruppen zur chemischen Vernetzung, wobei Hydroxygruppen bevorzugt sind. Als Vernetzer werden Aminoharze, bevorzugt Melaminharze eingesetzt.

Als Lösemittel können all jene verwendet werden, welche oben bereits in Zusammenhang mit dem erfindungsgemäßen lösemittelbasierten Klarlack genannt worden sind. Bevorzugt ist der Einsatz von wässrigen Basislacken. Wässrig ist eine dem Fachmann geläufige Spezifizierung von Beschichtungsmitteln, die als Lösemittel nicht ausschließlich organische Lösemittel enthalten, sondern auch auf Wasser als Lösemittel basieren. Wässrig bedeutet im Rahmen der vorliegenden Erfindung insbesondere, dass der Basislack vorzugsweise mindestens 20 Gew.-%, besonders bevorzugt mindestens 25 Gew.-% Wasser, jeweils bezogen auf die Gesamtmenge des wässrigen Basislacks, enthält. Besonders bevorzugt ist wässrig so zu verstehen, dass neben der genannten Bedingungen "mindestens 20 Gew.-% (beziehungsweise mindestens 25 Gew.-%) Wasser, bezogen auf die Gesamtmenge des wässrigen Basislacks" als weitere Voraussetzung zu erfüllen ist, dass der Anteil organischer Lösemittel in dem Basislack im Bereich von 10 bis 20 Gew.-%, jeweils bezogen auf die Gesamtmenge des wässrigen Basislacks, liegt.

Des Weiteren kann der wässrige Basislack neben Wasser auch organische Lösemittel enthalten. Bevorzugt eingesetzt werden wassermischbare organische Lösemittel.

Als Bindemittel in wässrigen Basislacken dienen bevorzugt Polyurethan-, Polyester- und/oder Epoxidharze. Ebenfalls möglich ist der Einsatz von Poly(meth)acrylatharzen Die genannten organischen Polymere enthalten vorzugsweise zusätzlich unterschiedliche funktionelle Gruppen zur chemischen Vernetzung, wobei Hydroxylgruppen bevorzugt sind. Die Dispergierbarkeit der organischen Polymere in Wasser kann über die dem Fachmann geläufigen Maßnahmen erreicht werden. Dabei kann es sich um die ionische Modifizierung der organischen Polymere durch Einführung von Monomeren, die beispielsweise Carboxylat- oder Sulfonatgruppen enthalten, handeln. Als Vernetzer werden bevorzugt Aminharze und Polyisocyanate eingesetzt. Bevorzugte Aminharze sind Melaminharze. Bevorzugte Polyisocyanate sind all jene, welche bereits bei der Beschreibung des lösemittelbasierten Klarlacks offenbart wurden.

Daneben enthält der sowohl ein lösemittelbasierter als auch ein wässriger Basislack mindestens ein übliches und bekanntes farbgebendes und/oder effektgebendes Pigment. Beispiele für solche Pigmente sind Pigmente auf anorganischer Basis, wie beispielsweise Titandioxid, Eisenoxid und Ruß oder auch übliche Metallpigmente (beispielsweise handelsübliche Aluminiumbronzen, Edelstahlbronzen) und nicht-metallische Effektpigmente (beispielsweise Perlglanzbeziehungsweise Interferenzpigmente). Auch farbgebende Pigmente auf organischer Basis wie Azopigmente und Phthalocyaninpigmente können zum Einsatz kommen. Die Auswahl von Art und einzusetzender Menge von Pigmenten erfolgt in der dem Fachmann geläufigen Art und Weise und richtet sich nach den erforderlichen beziehungsweise gewünschten Eigenschaften des Beschichtungsmittels. Ergänzend sei hierzu auf Römpp-Lexikon Lacke und Druckfarben, Georg Thieme Verlag, Stuttgart, New York, 1998, Seiten 451, verwiesen.

**Applikation des Basislacks und des Klarlacks**

Die Applikation des Basislacks erfolgt nach den üblichen Applikationsmethoden wie beispielsweise Spritzen, Rakeln, Streichen, Giessen, Tauchen, Tränken, Träufeln oder Walzen. Bevorzugt ist die Spritzapplikation, vorzugsweise eine pneumatische Spritzapplikation oder insbesondere eine elektrostatische Spritzapplikation (ESTA). Vor der Applikation des erfindungsgemäßen Klarlacks kann die Basislackschicht getrocknet werden. Dies kann beispielsweise bei Raumtemperatur (18 bis 23°C) für 5 bis 90 Minuten, bevorzugt 20 bis 80 Minuten und ganz besonders bevorzugt bei 30 bis 70 Minuten erfolgen. Alternativ und besonders bevorzugt erfolgt die Trocknung jedoch bei 70 bis 90°C über eine Dauer von 5 bis 15 Minuten.

Handelt es sich um einen 2K-Klarlack, so liegen Stammlack und Vernetzer getrennt vor. Das erfindungsgemäße Additiv kann dann sowohl im Stammlack, als auch in der den Vernetzer enthaltenden Härterkomponente vorliegen. Kurz vor der Applikation werden diese beiden Komponenten in einem dem Fachmann geläufigen Verhältnis miteinander gemischt und der resultierende Klarlack appliziert.

Zur Applikation des erfindungsgemäßen Klarlacks können grundsätzlich alle oben genannten Applikationsmethoden, welche bereits im Zusammenhang mit dem Basislack genannt wurden, eingesetzt werden. Bevorzugt ist die Spritzapplikation. Die Applikation des erfindungsgemäßen lösemittelbasierten Klarlacks erfolgt in den üblichen und bekannten Schichtdicken, beispielsweise in Nassfilmschichtdicken von 50 bis 250 Mikrometer, vorzugsweise von 60 bis 150 Mikrometer. Die dabei resultierenden Trockenfilmschichtdicken nach der Härtung liegen dann beispielsweise im Bereich von 15 bis 90 Mikrometer, vorzugsweise im Bereich von 30 bis 70 Mikrometer.

Im Anschluss werden die Basislackschicht und die Klarlackschicht gemeinsam gehärtet. Die Härtung weist keine methodischen Besonderheiten auf, sondern erfolgt nach den üblichen und bekannten Methoden wie beispielsweise Erhitzen in einem Umluftofen. So kann die Härtung zum Beispiel bei Temperaturen im Bereich von beispielsweise 80°C bis 200°C, bevorzugt von 100°C bis 150°C erfolgen. Beispielsweise kann die Härtung über einen Zeitraum von 5 bis 120 Minuten, bevorzugt 10 bis 40 Minuten, erfolgen. Der Härtung kann gegebenenfalls auch eine Ablüft- beziehungsweise Vortrocknungsphase vorausgehen, beispielsweise bei Raumtemperatur (18-23°C) für eine Zeitdauer von 1 bis 60 Minuten.

Die vorliegende Erfindung betrifft ebenfalls eine Mehrschichtlackierung, welche nach dem erfindungsgemäßen Verfahrens herstellbar ist. Alle hinsichtlich des erfindungsgemäßen lösemittelbasierten Klarlacks sowie dem erfindungsgemäßen Verfahren diskutierten besonderen Merkmale sind ebenfalls für die Mehrschichtlackierung bevorzugt.

Bei der gemäß dem erfindungsgemäßen Verfahren erhaltenen Mehrschichtlackierung handelt es sich insbesondere um solche, welche im Bereich der Automobilserienlackierung erhalten werden. Dabei können Fehlstellen auftreten. Die fehlerhaften Stellen können dann erneut mit einem entsprechenden Basislack und einem Klarlack beschichtet werden. Man erhält so eine Reparaturlackierung. Eine solche kann beispielsweise großflächig aufgetragen werden. Liegen nur kleine Fehlstellen, sogenannte "Spots" vor, so werden nur diese ausgebessert, also mit einem entsprechenden Basislack und Klarlack beschichtet. Ein solches Verfahren wird dann als "Spot Repair" bezeichnet.

Eine bevorzugten Ausführungsform des erfindungsgemäßen Verfahrens ist dem zuvor gesagten entsprechend dadurch gekennzeichnet, dass auf die Klarlackschicht gemäß Schritt (C) des erfindungsgemäßen Verfahrens

i. eine Basislackschicht aufgebracht wird,
ii. eine Klarlackschicht aufgebracht wird, und
iii. die Basislackschicht und die Klarlackschicht gemeinsam gehärtet werden.

Bevorzugt wird die in Schritt (C) erhaltene Klarlackschicht vor der Durchführung der Schritte i. bis iii. mindestens einmal, bevorzugt genau zweimal oder sogar dreimal oder viermal überbrannt.

Die im Sinne dieser bevorzugten Ausführungsform bevorzugt einzusetzenden Basis- und Klarlacke werden im Folgenden beschrieben.

Im Grunde genommen können dieselben Basislacke wie oben bereits beschrieben eingesetzt werden, die auch in Schritt (A) des erfindungsgemäßen Verfahrens eingesetzt werden. Allerdings wird sowohl bei lösemittelbasierten als auch bei wässrigen Basislacken üblicherweise auf den Einsatz von Aminharzen verzichtet. Im vorliegenden Fall sollen die Basislacke nämlich bevorzugt schon bei Temperaturen unter 100 °C vernetzen. Die Vernetzungstemperatur von Melaminharzen liegt aber üblicherweise jenseits der 100 °C. Daher werden als Vernetzer bevorzugt Polyisocyanate aber keine blockierten Polyisocyanate eingesetzt. Besonders bevorzugt sind all jene, welche oben bereits genannt wurden. Es werden somit bevorzugt 2-Komponentenbasislacke (2K-Basislacke) eingesetzt.

Im Grunde genommen enthält der an dieser Stelle einzusetzende Klarlack dieselben Komponenten, wie oben bereits im Zusammenhang mit dem erfindungsgemäßen Klarlack erläutert wurde, der in Schritt (B) des erfindungsgemäßen Verfahrens eingesetzt wird. Allerdings enthält der hier einzusetzende Klarlack kein erfindungsgemäßes Additiv

und unterscheidet sich allein schon deshalb von dem erfindungsgemäßen Klarlack. Wie bereits dargelegt soll hier eine Vernetzung bereits bevorzugt bei Temperaturen von unter 100 °C erfolgen. Somit wird auch hier auf den Einsatz von Aminharzen sowie blockierten Polyisocyanaten verzichtet. Daher werden als Vernetzer bevorzugt Polyisocyanate eingesetzt, welche nicht blockiert sind. Besonders bevorzugt sind all jene, welche oben bereits genannt wurden. Es werden somit bevorzugt 2K-Klarlacke eingesetzt.

Die Applikation des Basislacks erfolgt nach den üblichen Applikationsmethoden wie beispielsweise Spritzen, Rakeln, Streichen, Giessen, Tauchen, Tränken, Träufeln oder Walzen, die auch in Schritt (B) des erfindungsgemäßen Verfahrens eingesetzt werden können. Bevorzugt ist die Spritzapplikation, vorzugsweise eine pneumatische Spritzapplikation oder insbesondere eine elektrostatische Spritzapplikation (ESTA). Die Applikation des Basislacks erfolgt in den üblichen und bekannten Schichtdicken, beispielsweise in Nassfilmschichtdicken von 5 bis 200 Mikrometer, vorzugsweise von 20 bis 100 Mikrometer. Die dabei resultierenden Trockenfilmschichtdicken nach der Härtung liegen dann beispielsweise im Bereich von 2 bis 40 Mikrometer, vorzugsweise im Bereich von 5 bis 20 Mikrometer. Vor der Applikation des Klarlacks kann die Basislackschicht getrocknet werden. Dies kann beispielsweise bei Raumtemperatur (18 bis 23°C) für 5 bis 90 Minuten, bevorzugt 20 bis 80 Minuten und ganz besonders bevorzugt bei 30 bis 70 Minuten erfolgen. Alternativ und besonders bevorzugt erfolgt die Trocknung jedoch bei 70 bis 90°C über eine Dauer von 5 bis 15 Minuten. Anschließend wird der Klarlack aufgebracht. Üblicherweise handelt es sich um einen 2K-Klarlack. Härterkomponente und Stammlack werden in einem solchen Fall kurz vor Applikation des Klarlacks vermischt. Zur Applikation des erfindungsgemäßen Klarlacks können grundsätzlich alle oben genannten Applikationsmethoden, welche bereits im Zusammenhang mit dem Basislack genannt wurden, eingesetzt werden. Bevorzugt ist die Spritzapplikation. Die Applikation des Klarlacks erfolgt in den üblichen und bekannten Schichtdicken, beispielsweise in Nassfilmschichtdicken von 50 bis 250 Mikrometer, vorzugsweise von 60 bis 150 Mikrometer. Die dabei resultierenden Trockenfilmschichtdicken nach der Härtung liegen dann beispielsweise im Bereich von 15 bis 90 Mikrometer, vorzugsweise im Bereich von 30 bis 70 Mikrometer. Im Anschluss werden die Basislackschicht und die Klarlackschicht gemeinsam gehärtet. Die Härtung weist keine methodischen Besonderheiten auf, sondern erfolgt nach den üblichen und bekannten Methoden wie beispielsweise Erhitzen in einem Umluftofen. So kann die Härtung zum Beispiel im Bereich der Raumtemperatur oder auch bei erhöhten Temperaturen im Bereich von beispielsweise 40°C bis 100°C, bevorzugt von 50°C bis 90°C erfolgen. Beispielsweise kann die Härtung über einen Zeitraum von 5 bis 120 Minuten, bevorzugt 10 bis 40 Minuten, erfolgen. Der Härtung kann gegebenenfalls auch eine Ablüft- beziehungsweise Vortrocknungsphase vorausgehen, beispielsweise bei Raumtemperatur für eine Zeitdauer von 1 bis 60 Minuten.

Die erhaltenen Beschichtungen weisen eine hervorragende Haftung zwischen der Klarlackschicht gemäß Schritt (C) und dem auf dieser applizierten Basislack auf.

Die vorliegende Erfindung betrifft ebenfalls eine Mehrschichtlackierung, welche nach dieser bevorzugten Ausführungsform des erfindungsgemäßen Verfahrens herstellbar ist. Alle hinsichtlich des erfindungsgemäßen lösemittelbasierten Klarlacks sowie dieser bevorzugten Ausführungsform des erfindungsgemäßen Verfahrens diskutierten besonderen Merkmale sind ebenfalls für die Mehrschichtlackierung bevorzugt.

Bei der Ausstattung von Automobilkarossen werden die Sichtscheiben mit bestimmten Dichtungsmitteln in die vorgesehenen Nuten der Fensterrahmen eingesetzt und verklebt. Eine weitere bevorzugte Ausführungsform des erfindungsgemäßen Verfahrens ist dem zuvor gesagten entsprechend dadurch gekennzeichnet, dass auf die gehärtete Klarlackschicht gemäß Schritt (C) ein Dichtungsmittel aufgebracht wird.

Alle oben hinsichtlich des erfindungsgemäßen lösemittelbasierten Klarlacks bereits diskutierten besonderen Merkmale sind ebenfalls für das in Rede stehende erfindungsgemäße Verfahren bevorzugt.

Die einzusetzenden Dichtungsmittel bestehen üblicherweise aus plastischen Wülsten. Sie enthalten als Bindemittel üblicherweise feuchtigkeitshärtende Polyurethane. Dabei handelt es sich um Präpolymere aus Polyetherpolyolen und stöchiometrisch überschüssigen Mengen an aromatischen Diisocyanaten, die dann endständige Isocyanatgruppen bilden. Die Vernetzungsreaktion besteht in einer Aufnahme von Luftfeuchtigkeit. Es entstehen dabei Carbaminsäuren, die rasch in primäres Amin und Kohlendioxid zerfallen. Das gebildete Amin reagiert dann weiter mit den verbliebenden Isocyanatgruppen. Zur Beschleunigung dieser Reaktion können Katalysatoren eingesetzt werden. Bevorzugt sind hierbei Dibutylzinndilaurat und Bismutlactat. Ferner enthalten typische Dichtungsmittel Pigmente. Bevorzugt handelt es sich hierbei um Ruß. Dieses ist bevorzugt mit bis zu 20 Gew.-% bezogen auf die Gesamtmasse des Dichtungsmittels enthalten. Entsprechende einzusetzende Dichtungsmittel sind dem Fachmann bekannt und kommerziell erhältlich, beispielsweise unter den Bezeichnungen Sikaflex® 250PC-T, Sikaflex® 250DB-2 und EFBOND® DA293.

Die Auftragung des Dichtungsmittels erfolgt nach den üblichen dem Fachmann hierfür bekannten Applikationsmethoden. Bevorzugt ist die Spritzapplikation.

Die erhaltenen Beschichtungen weisen eine hervorragende Haftung zwischen der Klarlackschicht gemäß Schritt (C) und dem Dichtungsmittel auf.

Die vorliegende Erfindung betrifft ebenfalls eine Mehrschichtlackierung, welche nach dieser bevorzugten Ausführungsform des erfindungsgemäßen Verfahrens herstellbar ist. Alle hinsichtlich des erfindungsgemäßen lösemittelbasierten Klarlacks sowie dieser bevorzugten Ausführungsform des erfindungsgemäßen Verfahrens diskutierten besonderen Merkmale sind ebenfalls für die Mehrschichtlackierung bevorzugt.

**Verwendung des erfindungsgemäßen Additivs als Haftvermittler**

Die vorliegende Erfindung betrifft schließlich auch die Verwendung mindestens eines Additivs in lösemittelbasierten Klarlacken, wobei das Additiv herstellbar ist durch die Umsetzung von

(a) mindestens einem alpha,omega-hydroxyfunktionalisierten Oligoester, welcher eine OH-Zahl von 30 bis 160 mg KOH/g, einen theoretischen Kohlenstoff-Kohlenstoff-Doppelbindungsgehalt von 1 bis 2,5 mmol/g, ein zahlenmittleres Molekulargewicht von 1000 bis 3000 g/mol und ein gewichtsmittleres Molekulargewicht von 2800 bis 10000 g/mol besitzt, und

(b) mindestens einem Alkoxysilan der Strukturformel (II)

$$A\text{-}R\text{-}Si(R')_x(OR'')_{3-x}$$

wobei

- es sich bei A um eine OH-reaktive funktionelle Gruppe handelt,
- R ein aliphatischer Rest mit 2 bis 12 Kohlenstoffatomen, ein cycloaliphatischer Rest mit 3 bis 12 Kohlenstoffatomen, ein aromatischer Rest mit 6 bis 12 Kohlenstoffatomen oder ein araliphatischer Rest mit 7 bis 18 Kohlenstoffatomen ist,
- der Rest R' ausgewählt ist aus der Gruppe der $C_1$- bis $C_{12}$-Alkylreste,
- R" ein Methyl- oder Ethylrest ist, und
- x = 0 bis 2 beträgt,

mit der Maßgabe, dass mindestens 90 mol-% aller OH-Gruppen des alpha,omega-hydroxyfunktionalisierten Oligoesters mit einer OH-reaktiven funktionellen Gruppe A zur Reaktion gebracht worden sind,
und zudem die Summe über die gewichtsprozentualen Anteile aller erfindungsgemäßen Additive 0,5 bis 10 Gew.-% bezogen auf die Gesamtmenge des lösemittelbasierten Klarlacks beträgt.

Alle oben hinsichtlich des erfindungsgemäßen lösemittelbasierten Klarlacks bereits diskutierten besonderen Merkmale sind ebenfalls für die in Rede stehende erfindungsgemäße Verwendung bevorzugt.

Unter Haftungsverbesserung ist eine Verbesserung der Haftung im Vergleich zu solchen Klarlacken zu verstehen, welche kein erfindungsgemäßes Additiv enthalten.

Bevorzugt werden die erfindungsgemäßen Additive zur Verbesserung der Haftung in der Reparaturlackierung eingesetzt. Die Verbesserung der Haftung tritt insbesondere zwischen der gegebenenfalls einmal oder mehrfach überbrannten Klarlackschicht und der im Zuge der Reparatur auf dieser applizierten Lackschicht auf. Bei letzterer handelt es sich üblicherweise um eine Basislackschicht, auf welche zudem noch eine Klarlackschicht aufgetragen wurde (vgl. das oben beschriebene Verfahren betreffend die Reparaturlackierung). Im vorliegenden Fall ist unter dem Begriff "Reparaturlackierung" die sogenannte OEM-Reparaturlackierung zu verstehen. Das heißt, dass bei der Serienlackierung entstandene Fehler direkt im Werk ausgebessert beziehungsweise repariert werden. Die Reparatur etwaiger Fehlstellen kann großflächig erfolgen. Daneben ist aber auch "Spot Repair" möglich. Die Haftung kann beispielsweise mit Hilfe des Gitterschnitttests nach DIN EN ISO 2409 (Datum: April 2010) untersucht werden.

Ebenfalls bevorzugt werden die erfindungsgemäßen Additive zur Verbesserung der Haftung bei der Scheibenverklebung eingesetzt. Die Verbesserung der Haftung tritt insbesondere zwischen der gegebenenfalls einmal oder mehrfach überbrannten Klarlackschicht und des im Zuge der Scheibenverklebung auf diese applizierten Dichtungsmittels auf. Die Haftung lässt sich beispielsweise mit Hilfe eines "Scheibenverklebungstests" (Peeltest von Scheibenklebstoffen) untersuchen. Der Sollwert liegt bei $\leq 2$. Der Peeltest von Scheibenklebstoffen wird gemäß der in der WO 2012/058735 A1 auf Seite 23, letzter Absatz bis Seite 24, Zeile 2 beschriebenen Methode durchgeführt, wobei das Bruchbild jedoch nach einem modifizierten Schema mit den Noten 1 bis 4 bewertet wird, welches im experimentellen Teile unter Punkt I.3 erläutert ist. Der inWO 2012/058735 A1 auf Seite 23, letzter Absatz bis Seite 24, Zeile 2 beschriebene Peeltest wird unter Klimabedingungen gemäß DIN EN ISO 6270-2 CH (Datum: September 2005) durchgeführt.

Auf dem ausgehärteten Klarlack wurde ein Klebstoff (EFBOND® DA 293) als Dichtungsmittel aufgetragen. Dieser Klebstoff dient der Verklebung des Klarlacks mit einer Glasscheibe.

Ebenfalls bevorzugt werden die erfindungsgemäßen Additive zur Verbesserung der Haftung diverser weiterer Komponenten, bevorzugt von Acrylat-Klebebändern auf der betreffenden Klarlackschicht verwendet. Das Acrylat-Klebeband wird bevorzugt für die Anbringung von Zierleisten oder Typenschildern eingesetzt.

**Beispiele**

**Herstellbeispiel**

**Beispiel A: Darstellung des alpha,omega-hydroxyfunktionalisierten Oligoesters**

Die in Tabelle 1 bezeichneten Edukte werden wie im Folgenden dargestellt in den dort angegeben molaren Verhältnissen zur Reaktion gebracht. Zunächst werden Maleinsäureanhydrid (MSA), Adipinsäure (AD) und 1,6-Hexandiol (HD) in einen 4-Liter-Reaktor aus rostfreiem Stahl, ausgestattet mit einer Kolonne, einem Kühler sowie einem Wasserabscheider gegeben. Anschließend erfolgt die Zugabe von 3% Xylol als Schleppmittel und 0.1% Methylhydrochinon (die prozentualen Angaben beziehen sich auf die Menge des eingesetzten MSA, AD und HD). Das resultierende Reaktionsgemisch wird innerhalb von 5 Stunden unter Magerluft aufgeheizt. Während der gesamten Reaktionszeit überschreitet die Temperatur des Reaktionsgemischs 230°C nicht. Nachdem eine Säurezahl von 2 mg KOH/g erreicht wird, wird das Reaktionsgemisch auf 80 °C abgekühlt. Der resultierende alpha,omega-hydroxyfunktionalisierte Oligoester weist die folgenden Kennzahlen auf:

OH-Zahl: 65 mg KOH/g
Zahlenmittleres Molekulargewicht: 1412 g/mol
Gewichtsmittleres Molekulargewicht: 3313 g/mol
Theoretischer Kohlenstoff-Kohlenstoff-Doppelbindungsgehalt: 1,86 mmol/g

Tabelle 1: Stoffmengen der einzusetzenden Edukte in mol.

| | Rohstoff | Stoffmenge |
|---|---|---|
| 1 | MSA | 5,05 |
| 2 | AD | 5,53 |
| 3 | HD | 14,46 |
| Festkörper [%] | | 97 |

**Beispiel B: Herstellung eines erfindungsgemäßen Additivs (A1)**

In einem Stahlreaktor, ausgestattet mit einem Rückflusskühler und einem Thermometer, werden 27,4 Teile 3-Isocyanatopropyltriethoxysilan der Firma ABCR GmbH & Co.KG (euopäischer Versand der Gelest INC. Produkte), 9,4 Teile Butylacetat, 0,2 Teile 1,4-Diazabicyclo-2,2,2-octan und 2,2 Teile Triethylorthoformiat vorgelegt. Über einen Tropftrichter wird anschließend ein Gemisch aus 46,3 Teilen des alpha,omega-hydroxyfunktionalisierten Oligoesters (Beispiel A) und 14,5 Teile Butylacetat unter Stickstoffatmosphäre und Rühren zugetropft. Nach 6-stündigem Rühren bei 70-80°C wird der NCO-Wert titrimetrisch gemäß DIN EN ISO 11909 (Datum: Mai 2007) überprüft und die Reaktion so lange fortgeführt, bis ein NCO-Wert von 0 festgestellt wird. Das erfindungsgemäße Additiv A1 weist einen nichtflüchtigen Anteil von 71,8 Gew.-% auf.

**I) Scheibenverklebungshaftung**

**I.1) Herstellung eines das Additiv (A1) enthaltenen lösemittelbasierten 2K-Klarlacks**

Es wurde ein handelsüblicher lösemittelbasierter 2K-Klarlack verwendet. Die Zusammensetzung der beiden Komponenten Stammlack und Härter ist in Tabelle 2 wiedergegeben. Es wurden jeweils einmal der Stammlack und einmal der Härter mit jeweils 4 Gew.-% des Additivs (A1), bezogen auf die Gesamtmenge des 2K-Klarlacks versetzt. Zur Additivierung wurde ein Laborrührer (260-1820 rpm) eingesetzt. Die Komponenten Stammlack und Härter werden im Verhältnis 100 : 36 eingesetzt, wobei sich das Verhältnis auf das Gewicht der Komponenten bezieht.

Tabelle 2: Zusammensetzung des eingesetzten Klarlacks (Stammlack, Härter). Die Gewichtsprozentualen Angaben beziehen sich jeweils auf das Gesamtgewicht des Stammlacks beziehungsweise des Härters.

| **Stammlack** | |
|---|---|
| Komponente | Gew.-% |
| Hydroxyfunktionelles Acrylat (I) | 35 |
| Hydroxyfunktionelles Acrylat (II) | 26 |
| Anti-Absetzmittel | 13 |
| Thixotropierungsmittel | 2 |
| Cymel 202 (82-%ig), (Melaminformaldehydharz) | 8 |
| Solventnaphtha | 4 |
| Tinuvin 384 (Lichtschutzmittel) | 1,1 |
| Tinuvin 292 (Lichtschutzmittel) | 0,9 |
| Butylacetat | 3,7 |
| Byk 325 (Oberflächenadditiv) | 0,2 |
| Dipropylenglykolmethylether | 7 |
| Butanol | 1 |
| **Härter** | |
| Komponente | Gew.-% |
| Butylacetat | 3,2 |
| Isophorondiisocyanat | 15,2 |
| Desmodur N3390 | 78,2 |
| Soventnaphtha | 3,4 |

**I.2) Herstellung eines beschichteten Substrats**

Der Klarlack wird auf einem nacheinander mit einem Elektrotauchlack, einem Füller und einem Basislack beschichteten Substrat aufgetragen. Zur Herstellung der Elektrotauchlackschicht wird das kommerziell erhältliche Produkt CathoGuard® 500 der Firma BASF Coatings eingesetzt. Zur Herstellung der Füllerschicht wird das kommerziell erhältliche Produkt SecuBloc® der Firma BASF Coatings eingesetzt. Das mit dem Füller beschichtete Substrat wird mit dem Basislack beschichtet, so dass sich eine Trockenschichtdicke des Basislacks von 10-15 Mikrometer ergibt. Zur Herstellung des Basislacks wird ein kommerziell erhältlicher wässriger Basislack eingesetzt, nämlich das kommerziell erhältliche Produkt Colorbrite® der Firma BASF Coatings. Anschließend wird 7 Minuten bei 80°C getrocknet. Zur Herstellung des Klarlacks werden Stammlack und Härter gemäß Tabelle 2 sowie das in der Stammlack-Komponente enthaltene Additiv (A1) homogen mittels Holzspatel verrührt, wobei die Komponenten Stammlack und Härter im Verhältnis 100 : 36 eingesetzt werden, wobei sich das Verhältnis auf das Gewicht der Komponenten bezieht, und anschließend pneumatisch appliziert. Daraufhin wird der Klarlack bei zunächst bei 135°C für 20 Minuten getrocknet und die aufgetragenen Beschichtungen anschließend für 30 Minuten bei 135 °C eingebrannt. Der Einbrennschritt wird noch zweimal wiederholt. Die resultierende Klarlackschicht weist eine Trockenfilmschichtdicke von 40-45 Mikrometer auf.

**I.3) Untersuchung der Haftungseigenschaften**

Auf dem ausgehärteten Klarlack wurde ein Klebstoff (EFBOND® DA 293) als Dichtungsmittel aufgetragen. Dieser Klebstoff dient der Verklebung des Klarlacks mit einer Glasscheibe. Die Haftungseigenschaften der Klebstoffschicht auf dem Klarlack werden mittels des "Scheibenverklebungstests" (Peeltest von Scheibenklebstoffen) gemäß der vorstehend beschriebenen Methode untersucht.

Das Bruchbild wird nach folgendem Schema bewertet, wobei die Abkürzung i.O. für "in Ordnung" und die Abkürzung n.i.O. für "nicht in Ordnung" steht:

| Note | Bewertung | köhäsiver Anteil im Bruchbild |
|---|---|---|
| 1 | i.O. | > 95 % |
| 2 | i.O. | > 75 % bis 95 % |
| 3 | n.i.O. | > 25 % bis 75 % |
| 4 | n.i.O. | < 25 % |

Aus den in Tabelle 3 dargestellten Ergebnissen folgt, dass sich durch den Einsatz des Additivs eine deutliche Verbesserung der Haftung zwischen der Klebstoff- und der Klarlackschicht erzielen lässt.

Tabelle 3: Haftungseigenschaften des nichtadditivierten sowie des additivierten Klarlacks.

| Formulierung | Haftung (Note) |
|---|---|
| ohne Additiv | 4 |
| 4 Gew.-% Additiv im Stammlack | 1 |
| 4 Gew.-% Additiv in Härter | 1 |

**II) Reparaturlackierung eines OEM-Lacks**

**II.1) Herstellung eines das Additiv (A1) enthaltenen lösemittelbasierten 2K-Klarlacks**

Es wird ein handelsüblicher lösemittelbasierter 2K-Klarlack verwendet. Die Zusammensetzung der beiden zur Herstellung des Klarlacks eingesetzten Komponenten Stammlack und Härter ist bereits Tabelle 2 wiedergegeben. Es wurde dabei der Stammlack mit 4 Gew.-% oder mit 2 Gew.-% des Additivs (A1), bezogen auf die Gesamtmenge des 2K-Klarlacks, versetzt. Zur Additivierung wurde ein Laborrührer (260-1820 rpm) eingesetzt.

**II.2) Herstellung eines beschichteten Substrats**

Der Klarlack wird auf einem nacheinander mit einem Elektrotauchlack, einem Füller und einem Basislack beschichteten Substrat aufgetragen. Diese Mehrfachbeschichtung erfolgt gemäß der unter Punkt **I.2)** beschriebenen Vorgehensweise. Zur Herstellung des Klarlacks werden Stammlack und Härter gemäß Tabelle 2 sowie das in der Stammlack-Komponente enthaltene Additiv (A1) homogen mittels Holzspatel verrührt, wobei die Komponenten Stammlack und Härter im Verhältnis 100 : 36 eingesetzt werden, wobei sich das Verhältnis auf das Gewicht der Komponenten bezieht, und anschließend pneumatisch appliziert. Daraufhin wird der Klarlack bei zunächst bei 135°C für 20 Minuten getrocknet und die aufgetragenen Beschichtungen anschließend für 30 Minuten bei 135 °C eingebrannt. Der Einbrennschritt wird noch zweimal wiederholt. Die resultierende Klarlackschicht weist eine Trockenfilmschichtdicke von 40-45 Mikrometer auf. Auf die überbrannte additivierte Klarlackschicht wird eine Reparaturbasislackschicht pneumatisch appliziert, so dass sich eine Trockenschichtdicke des Reparaturbasislacks von 10-15 Mikrometer ergibt. Die resultierende Schicht wird für 10 Minuten bei 18-23°C getrocknet. Als Reparaturbasislack wird die Basislackzusammensetzung gemäß Tabelle 4 eingesetzt. Anschließend wird ein Reparaturklarlack via pneumatischer Spritzapplikation aufgetragen. Der resultierende Aufbau aus Basislack und Klarlack wird zuerst 10 Minuten bei Raumtemperatur getrocknet und anschließend für 10 Minuten bei 60 °C im Umluftofen gehärtet. Als Reparaturklarlack wird die 2K-Klarlackzusammensetzung gemäß Tabelle 2 eingesetzt, mit dem Unterschied, dass diese kein Additiv (A1) enthält.

Tabelle 4: eingesetzte Basislackzusammensetzung zur Herstellung des Reparaturbasislacks

| Komponente | Gew.-% |
|---|---|
| Handelsübliches Thixotropierungsmittel (Laponite RD) | 18,2 |
| Wasser | 9,3 |
| Handelsübliche Dispersion eines OHfunktionellen Polyurethanharzes (Wassergehalt: 66,0 Gew.-%, organische Lösemittel: 6,3 Gew.-%) | 31,2 |
| Handelsübliche Dispersion eines OHfunktionellen Polyesterharzes (Wassergehalt: 17,7 Gew.-%, organische Lösemittel: 20,0 Gew.-%) | 3,0 |
| Butoxypropanol | 2,0 |

(fortgesetzt)

| Komponente | Gew.-% |
|---|---|
| Cymel 327 (handelsübliches Melaminformaldehydharz) | 4,2 |
| TMDD BG 52 (handelsübliches Netzmittel) | 0,5 |
| DMEA 10%ig in Wasser | 1,5 |
| Handelsübliche Dispersion eines OHfunktionellen Acrylatharzes (Wassergehalt: 49,5 Gew.-%, organische Lösemittel: 13,0 Gew.-%) | 5,1 |
| Foamstar MF324 (handelsüblicher Entschäumer) | 0,5 |
| Ethylhexanol | 4,0 |
| BYK 347 (handelsübliches Netzmittel) | 0,5 |
| Pluriol P900 (handelsübliches Polyethylenglykol) | 2,0 |
| Isopropanol | 2,2 |
| Viscalex HV 30 (handelsübliches Rheologiemittel) | 0,4 |
| WBL Tönpaste (10%-ige Dispersion des Pigments "Ruß Monarch 1400" in Wasser | 10,1 |
| WBL Tönpaste (50%-ige Dispersion des Pigments "Titanrutil 2310" in Wasser | 0,04 |

**II.3) Untersuchung der Haftungseigenschaften**

Die Haftungseigenschaften der hergestellten Beschichtungen wird mittels des Gitterschnitttests nach DIN EN ISO 2409 (Datum: April 2010) untersucht. Die Haftung wurde für einen dreifach und einen fünffach überbrannten Lackaufbau untersucht (s. Tabelle 5).

Tabelle 5: Haftungseigenschaften des nichtadditivierten sowie des additivierten Klarlacks eines entsprechend beschichteten Substrats in der Reparaturlackierung

| **eingesetzter Klarlack** | Gitterschnitttest nach DIN EN ISO 2409 (3-fach überbrannt) / Note | Gitterschnitttest nach DIN EN ISO 2409 (5-fach überbrannt) / Note | Glanzmessung gemäß DIN EN ISO 2813 |
|---|---|---|---|
| ohne Additiv (A1) | 5 | 5 | - |
| 2 Gew.-% Additiv (A1), bezogen auf die Gesamtmenge des 2K-Klarlacks | 1 | 1 | + |
| 4 Gew.-% Additiv (A1), bezogen auf die Gesamtmenge des 2K-Klarlacks | 1 | 1 | + |

Die Glanzbestimmung dient zur Ermittlung des Oberflächenglanzes von lackierten Flächen und wird bei einem Winkel von 60° gemäß DIN EN ISO 2813 (Datum: Oktober 2012) durchgeführt. Die Beurteilung erfolgt durch Bestimmung des Glanzwerts (GU) zwischen 0 und 100. Ein Glanz kleiner 35 GU wird mit "-" charakterisiert und ein Glanz >50 wird mit "+" charakterisiert.

**Patentansprüche**

1. Lösemittelbasierter Klarlack, **dadurch gekennzeichnet, dass** dieser mindestens ein Additiv enthält, welches herstellbar ist durch die Umsetzung von

   (a) mindestens einem alpha,omega-hydroxyfunktionalisierten Oligoester, welcher eine OH-Zahl von 30 bis 160

mg KOH/g, einen theoretischen Kohlenstoff-Kohlenstoff-Doppelbindungsgehalt von 1 bis 2,5 mmol/g, ein zahlenmittleres Molekulargewicht von 1000 bis 3000 g/mol und ein gewichtsmittleres Molekulargewicht von 2800 bis 10000 g/mol besitzt, und
(b) mindestens einem Alkoxysilan der Strukturformel (II)

$$A\text{-}R\text{-}Si(R')_x(OR'')_{3-x}$$

wobei

- A eine OH-reaktive funktionelle Gruppe ist,
- R ein aliphatischer Rest mit 2 bis 12 Kohlenstoffatomen, ein cycloaliphatischer Rest mit 3 bis 12 Kohlenstoffatomen, ein aromatischer Rest mit 6 bis 12 Kohlenstoffatomen oder ein araliphatischer Rest mit 7 bis 18 Kohlenstoffatomen ist,
- der Rest R' ausgewählt ist aus der Gruppe der $C_1$- bis $C_{12}$-Alkylreste,
- R" ein Methyl- oder Ethylrest ist, und
- x = 0 bis 2 beträgt,

mit der Maßgabe, dass mindestens 90 mol-% aller OH-Gruppen des alpha,omega-hydroxyfunktionalisierten Oligoesters mit einer OH-reaktiven funktionellen Gruppe A zur Reaktion gebracht worden sind,
und zudem die Summe über die gewichtsprozentualen Anteile aller dieser Additive 0,5 bis 10 Gew.-% bezogen auf die Gesamtmenge des lösemittelbasierten Klarlacks beträgt.

2. Lösemittelbasierter Klarlack nach Anspruch 1, **dadurch gekennzeichnet, dass** die Summe über die gewichtsprozentualen Anteile aller Additive 1,5 bis 7,5 Gew.-% bezogen auf die Gesamtmenge des lösemittelbasierten Klarlacks beträgt.

3. Lösemittelbasierter Klarlack nach mindestens einem der Ansprüche 1 und 2, **dadurch gekennzeichnet, dass** der alpha,omega-hydroxyfunktionalisierte Oligoester die folgende Strukturformel (I) besitzt:

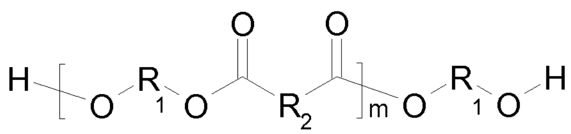

(I)

wobei

- die Reste $R_1$ unabhängig voneinander ausgewählt sind aus der Gruppe der linearen oder cyclischen Alkylenreste,
- die Reste $R_2$ unabhängig voneinander ausgewählt sind aus der Gruppe der Alkylen- oder Alkenylenreste, wobei das Verhältnis von Alkylen- zu Alkenylenresten gerade so gewählt ist, dass der alpha,omega-hydroxyfunktionalisierte Oligoester der Strukturformel (I) einen theoretischen Kohlenstoff-Kohlenstoff-Doppelbindungsgehalt von 1 bis 2,5 mmol/g besitzt
- der Index m so gewählt ist, dass das zahlenmittlere Molekulargewicht des alpha,omega-hydroxyfunktionalisierten Oligoesters der Strukturformel (I) 1000 bis 3000 g/mol beträgt.

4. Lösemittelbasierter Klarlack nach Anspruch 3, **dadurch gekennzeichnet, dass** die Reste $R_1$ ausgewählt sind aus der Gruppe der linearen Alkylenreste mit 6 bis 10 Kohlenstoffatomen.

5. Lösemittelbasierter Klarlack nach mindestens einem der Ansprüche 3 und 4, **dadurch gekennzeichnet, dass** die Reste $R_2$ ausgewählt sind aus der Gruppe der linearen Alkylenreste mit 4 bis 8 Kohlenstoffatomen oder der linearen Alkenylenreste mit 2 bis 4 Kohlenstoffatomen.

6. Lösemittelbasierter Klarlack nach mindestens einem der Ansprüche 3 bis 5, **dadurch gekennzeichnet, dass** das Alkoxysilan die allgemeine Strukturformel (II.1) besitzt

$$OCN\text{-}R_1\text{-}Si(R')_x(OR'')_{3-x}$$

wobei

- $R_1$ ein $C_2$- bis $C_{12}$-Alkylenrest, ein $C_2$- bis $C_{12}$-Alkenylenrest oder ein mehrfach ungesättigter $C_4$- bis $C_{12}$-Alkylenrest ist,
- der Rest R' ausgewählt ist aus der Gruppe der $C_1$- bis $C_{12}$-Alkylreste,
- R" ein Methyl- oder Ethylrest ist, und
- x = 0 bis 2 beträgt.

**7.** Lösemittelbasierter Klarlack nach Anspruch 6, **dadurch gekennzeichnet, dass** $R_1$ ein $C_2$- bis $C_6$-Alkylenrest ist.

**8.** Lösemittelbasierter Klarlack nach Anspruch 7, **dadurch gekennzeichnet, dass** x = 0.

**9.** Verfahren zur Herstellung einer Mehrschichtlackierung auf einem Substrat umfassend

(A) Aufbringen eines Basislacks,
(B) Aufbringen eines lösemittelbasierten Klarlacks nach mindestens einem der Ansprüche 1 bis 8,
(C) Gemeinsames Härten des Basislacks und des Klarlacks.

**10.** Mehrschichtlackierung herstellbar nach dem Verfahren gemäß Anspruch 9.

**11.** Verfahren gemäß Anspruch 9, **dadurch gekennzeichnet, dass** auf die Klarlackschicht gemäß Schritt (C)

i. eine Basislackschicht aufgebracht wird,
ii. eine Klarlackschicht aufgebracht wird, und
iii. die Basislackschicht und die Klarlackschicht gemeinsam gehärtet werden.

**12.** Mehrschichtlackierung herstellbar nach dem Verfahren gemäß Anspruch 11.

**13.** Verfahren gemäß Anspruch 9, **dadurch gekennzeichnet, dass** auf die gehärtete Klarlackschicht gemäß Schritt (C) ein Dichtungsmittel aufgebracht wird.

**14.** Mehrschichtlackierung herstellbar nach dem Verfahren gemäß Anspruch 13.

**15.** Verwendung mindestens eines Additivs in lösemittelbasierten Klarlacken, **dadurch gekennzeichnet, dass** das Additiv herstellbar ist durch die Umsetzung von

(a) mindestens einem alpha,omega-hydroxyfunktionalisierten Oligoester, welcher eine OH-Zahl von 30 bis 160 mg KOH/g, einen theoretischen Kohlenstoff-Kohlenstoff-Doppelbindungsgehalt von 1 bis 2,5 mmol/g, ein zahlenmittleres Molekulargewicht von 1000 bis 3000 g/mol und ein gewichtsmittleres Molekulargewicht von 2800 bis 10000 g/mol besitzt, und
(b) mindestens einem Alkoxysilan der Strukturformel (II)

$$A\text{-}R\text{-}Si(R')_x(OR'')_{3-x}$$

wobei

- A eine OH-reaktive funktionelle Gruppe ist,
- R ein aliphatischer Rest mit 2 bis 12 Kohlenstoffatomen, ein cycloaliphatischer Rest mit 3 bis 12 Kohlenstoffatomen, ein aromatischer Rest mit 6 bis 12 Kohlenstoffatomen oder ein araliphatischer Rest mit 7 bis 18 Kohlenstoffatomen ist,
- der Rest R' ausgewählt ist aus der Gruppe der $C_1$- bis $C_{12}$-Alkylreste,
- R" ein Methyl- oder Ethylrest ist, und
- x = 0 bis 2 beträgt,

mit der Maßgabe, dass mindestens 90 mol-% aller OH-Gruppen des alpha,omega-hydroxyfunktionalisierten Oligoesters mit einer OH-reaktiven funktionellen Gruppe A zur Reaktion gebracht worden sind,
und zudem die Summe über die gewichtsprozentualen Anteile aller dieser Additive 0,5 bis 10 Gew.-% bezogen auf die Gesamtmenge des lösemittelbasierten Klarlacks beträgt.

## Claims

1. Solventborne clearcoat material **characterized in that** it comprises at least one additive preparable by reacting

    (a) at least one alpha,omega-hydroxy-functionalized oligoester which possesses an OH number of 30 to 160 mg KOH/g, a theoretical carbon-carbon double bond content of 1 to 2.5 mmol/g, a number-average molecular weight of 1000 to 3000 g/mol, and a weight-average molecular weight of 2800 to 10 000 g/mol, and
    (b) at least one alkoxysilane of the structural formula (II)

    $$A\text{-}R\text{-}Si(R')_x(OR'')_{3-x}$$

    where

    - A is an OH-reactive functional group,
    - R is an aliphatic radical having 2 to 12 carbon atoms, a cycloaliphatic radical having 3 to 12 carbon atoms, an aromatic radical having 6 to 12 carbon atoms, or an araliphatic radical having 7 to 18 carbon atoms,
    - the radical R' is selected from the group of C1 to C12 alkyl radicals,
    - R" is a methyl or ethyl radical, and
    - x is 0 to 2,

    with the proviso that at least 90 mol% of all the OH groups of the alpha,omega-hydroxy-functionalized oligoester have been reacted with an OH-reactive functional group A,
    and, in addition, the sum of the weight percentage fractions of all these additives is 0.5 to 10 wt%, based on the total amount of the solventborne clearcoat material.

2. Solventborne clearcoat material according to Claim 1, **characterized in that** the sum of the weight percentage fractions of all the additives is 1.5 to 7.5 wt%, based on the total amount of the solventborne clearcoat material.

3. Solventborne clearcoat material according to at least one of Claims 1 and 2, **characterized in that** the alpha,omega-hydroxy-functionalized oligoester possesses the following structural formula (I):

    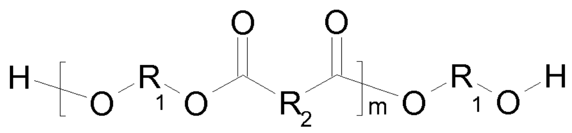

    (I)

    where

    - the radicals R1 independently of one another are selected from the group of linear or cyclic alkylene radicals,
    - the radicals R2 independently of one another are selected from the group of alkylene or alkenylene radicals, the ratio of alkylene to alkenylene radicals being selected specifically such that the alpha,omega-hydroxy-functionalized oligoester of the structural formula (I) possesses a theoretical carbon-carbon double bond content of 1 to 2.5 mmol/g,
    - the index m is selected such that the number-average molecular weight of the alpha,omega-hydroxy-functionalized oligoester of the structural formula (I) is 1000 to 3000 g/mol.

4. Solventborne clearcoat material according to Claim 3, **characterized in that** the radicals $R_1$ are selected from the group of linear alkylene radicals having 6 to 10 carbon atoms.

5. Solventborne clearcoat material according to at least one of Claims 3 and 4, **characterized in that** the radicals $R_2$ are selected from the group of linear alkylene radicals having 4 to 8 carbon atoms or of linear alkenylene radicals having 2 to 4 carbon atoms.

6. Solventborne clearcoat material according to at least one of Claims 3 to 5, **characterized in that** the alkoxysilane possesses the general structural formula (11.1)

    $$OCN\text{-}R_1\text{-}Si(R')_x(OR'')_{3-x}$$

where

- R1 is a C2 to C12 alkylene radical, a C2 to C12 alkenylene radical, or a polyunsaturated C4 to C12 alkylene radical,
- the radical R' is selected from the group of C1 to C12 alkyl radicals,
- R" is a methyl or ethyl radical, and
- x is 0 to 2.

**7.** Solventborne clearcoat material according to Claim 6, **characterized in that** $R_1$ is a $C_2$ to $C_6$ alkylene radical.

**8.** Solventborne clearcoat material according to Claim 7, **characterized in that** x = 0.

**9.** Process for producing a multicoat paint system on a substrate, comprising

(A) applying a basecoat material,
(B) applying a solventborne clearcoat material according to at least one of Claims 1 to 8,
(C) jointly curing the basecoat material and the clearcoat material.

**10.** Multicoat paint system producible by the process according to Claim 9.

**11.** Process according to Claim 9, **characterized in that**, atop the clearcoat film as per step (C),

i. a basecoat film is applied,
ii. a clearcoat film is applied, and
iii. the basecoat film and the clearcoat film are jointly cured.

**12.** Multicoat paint system producible by the process according to Claim 11.

**13.** Process according to Claim 9, **characterized in that**, atop the cured clearcoat film as per step (C), a sealant is applied.

**14.** Multicoat paint system producible by the process according to Claim 13.

**15.** Use of at least one additive in solventborne clearcoat materials, **characterized in that** the additive is preparable by reacting

(a) at least one alpha,omega-hydroxy-functionalized oligoester which possesses an OH number of 30 to 160 mg KOH/g, a theoretical carbon-carbon double bond content of 1 to 2.5 mmol/g, a number-average molecular weight of 1000 to 3000 g/mol, and a weight-average molecular weight of 2800 to 10 000 g/mol, and
(b) at least one alkoxysilane of the structural formula (II)

$$A\text{-}R\text{-}Si(R')_x(OR'')_{3-x}$$

where

- A is an OH-reactive functional group,
- R is an aliphatic radical having 2 to 12 carbon atoms, a cycloaliphatic radical having 3 to 12 carbon atoms, an aromatic radical having 6 to 12 carbon atoms, or an araliphatic radical having 7 to 18 carbon atoms,
- the radical R' is selected from the group of C1 to C12 alkyl radicals,
- R" is a methyl or ethyl radical, and
- x is 0 to 2,

with the proviso that at least 90 mol% of all the OH groups of the alpha,omega-hydroxy-functionalized oligoester have been reacted with an OH-reactive functional group A,
and, in addition, the sum of the weight percentage fractions of all these additives is 0.5 to 10 wt%, based on the total amount of the solventborne clearcoat material.

## Revendications

1. Vernis transparent à base de solvant, **caractérisé en ce que** celui-ci contient au moins un additif, qui peut être fabriqué par la mise en réaction de

(a) au moins un oligoester alpha,oméga-hydroxyfonctionnalisé, qui présente un indice OH de 30 à 160 mg KOH/g, une teneur en doubles liaisons carbone-carbone théorique de 1 à 2,5 mmol/g, un poids moléculaire moyen en nombre de 1 000 à 3 000 g/mol et un poids moléculaire moyen en poids de 2 800 à 10 000 g/mol, et
(b) au moins un alcoxysilane de formule structurale (II)

$$A\text{-}R\text{-}Si(R')_x(OR'')_{3-x}$$

dans laquelle

- A est un groupe fonctionnel réactif avec OH,
- R est un radical aliphatique de 2 à 12 atomes de carbone, un radical cycloaliphatique de 3 à 12 atomes de carbone, un radical aromatique de 6 à 12 atomes de carbone ou un radical araliphatique de 7 à 18 atomes de carbone,
- le radical R' est choisi dans le groupe des radicaux alkyle en $C_1$ à $C_{12}$,
- R" est un radical méthyle ou éthyle, et
- x = 0 à 2,

à condition qu'au moins 90 % en moles de tous les groupes OH de l'oligoester alpha,oméga-hydroxyfonctionnalisé aient été mis en réaction avec un groupe fonctionnel A réactif avec OH,
et en outre que la somme des proportions en poids de tous ces additifs soit de 0,5 à 10 % en poids, par rapport à la quantité totale du vernis transparent à base d'un solvant.

2. Vernis transparent à base d'un solvant selon la revendication 1, **caractérisé en ce que** la somme des proportions en poids de tous les additifs est de 1,5 à 7,5 % en poids, par rapport à la quantité totale du vernis transparent à base d'un solvant.

3. Vernis transparent à base d'un solvant selon au moins l'une quelconque des revendications 1 et 2, **caractérisé en ce que** l'oligoester alpha,oméga-hydroxyfonctionnalisé présente la formule structurale (I) suivante :

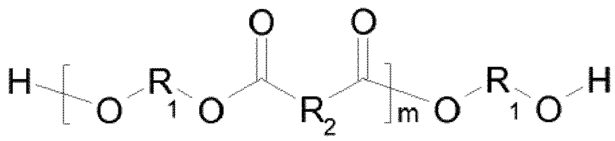

(I)

dans laquelle

- les radicaux $R_1$ sont choisis indépendamment les uns des autres dans le groupe des radicaux alkylène linéaires ou cycliques,
- les radicaux $R_2$ sont choisis indépendamment les uns des autres dans le groupes des radicaux alkylène ou alcénylène, le rapport entre les radicaux alkylène et alcénylène étant choisi de sorte que l'oligoester alpha,oméga-hydroxyfonctionnalisé de formule structurale (I) présente une teneur en doubles liaisons carbone-carbone théorique de 1 à 2,5 mmol/g,
- l'indice m est choisi de sorte que le poids moléculaire moyen en nombre de l'oligoester alpha,oméga-hydroxyfonctionnalisé de formule structurale (I) soit de 1 000 à 3 000 g/mol.

4. Vernis transparent à base d'un solvant selon la revendication 3, **caractérisé en ce que** les radicaux $R_1$ sont choisis dans le groupe des radicaux alkylène linéaires de 6 à 10 atomes de carbone.

5. Vernis transparent à base d'un solvant selon au moins l'une quelconque des revendications 3 et 4, **caractérisé en ce que** les radicaux $R_2$ sont choisis dans le groupe des radicaux alkylène linéaires de 4 à 8 atomes de carbone ou des radicaux alcénylène linéaires de 2 à 4 atomes de carbone.

6. Vernis transparent à base d'un solvant selon au moins l'une quelconque des revendications 3 à 5, **caractérisé en ce que** l'alcoxysilane présente la formule structurale générale (II.1)

$$OCN\text{-}R_1\text{-}Si(R')_x(OR'')_{3-x}$$

dans laquelle

- $R_1$ est un radical alkylène en $C_2$ à $C_{12}$, un radical alcénylène en $C_2$ à $C_{12}$ ou un radical alkylène en $C_4$ à $C_{12}$ polyinsaturé,
- le radical R' est choisi dans le groupe des radicaux alkyle en $C_1$ à $C_{12}$,
- R" est un radical méthyle ou éthyle, et
- x = 0 à 2.

7. Vernis transparent à base d'un solvant selon la revendication 6, **caractérisé en ce que** $R_1$ est un radical alkylène en $C_2$ à $C_6$.

8. Vernis transparent à base d'un solvant selon la revendication 7, **caractérisé en ce que** x = 0.

9. Procédé de fabrication d'un vernissage multicouche sur un substrat, comprenant :

(A) l'application d'un vernis de base,
(B) l'application d'un vernis transparent à base d'un solvant selon au moins l'une quelconque des revendications 1 à 8,
(C) le durcissement conjoint du vernis de base et du vernis transparent.

10. Vernissage multicouche pouvant être fabriqué par le procédé selon la revendication 9.

11. Procédé selon la revendication 9, **caractérisé en ce que**, sur la couche de vernis transparent selon l'étape (C),

i. une couche de vernis de base est appliquée,
ii. une couche de vernis transparent est appliquée, et
iii. la couche de vernis de base et la couche de vernis transparent sont durcies ensemble.

12. Vernissage multicouche pouvant être fabriqué par le procédé selon la revendication 11.

13. Procédé selon la revendication 9, **caractérisé en ce qu'**un agent d'étanchéité est appliqué sur la couche de vernis transparent durcie selon l'étape (C).

14. Vernissage multicouche pouvant être fabriqué par le procédé selon la revendication 13.

15. Utilisation d'au moins un additif dans des vernis transparents à base de solvants, **caractérisée en ce que** l'additif peut être fabriqué par la mise en réaction de

(a) au moins un oligoester alpha,oméga-hydroxyfonctionnalisé, qui présente un indice OH de 30 à 160 mg KOH/g, une teneur en doubles liaisons carbone-carbone théorique de 1 à 2,5 mmol/g, un poids moléculaire moyen en nombre de 1 000 à 3 000 g/mol et un poids moléculaire moyen en poids de 2 800 à 10 000 g/mol, et
(b) au moins un alcoxysilane de formule structurale (II)

$$A\text{-}R\text{-}Si(R')_x(OR'')_{3-x}$$

dans laquelle

- A est un groupe fonctionnel réactif avec OH,
- R est un radical aliphatique de 2 à 12 atomes de carbone, un radical cycloaliphatique de 3 à 12 atomes de carbone, un radical aromatique de 6 à 12 atomes de carbone ou un radical araliphatique de 7 à 18 atomes de carbone,
- le radical R' est choisi dans le groupe des radicaux alkyle en $C_1$ à $C_{12}$,
- R" est un radical méthyle ou éthyle, et

- x = 0 à 2,

à condition qu'au moins 90 % en moles de tous les groupes OH de l'oligoester alpha,oméga-hydroxyfonctionnalisé aient été mis en réaction avec un groupe fonctionnel A réactif avec OH,
et en outre que la somme des proportions en poids de tous ces additifs soit de 0,5 à 10 % en poids, par rapport à la quantité totale du vernis transparent à base d'un solvant.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20120045632 A1
- WO 2012058735 A1


### In der Beschreibung aufgeführte Nicht-Patentliteratur


- Römpp-Lexikon Lacke und Druckfarben. Georg Thieme Verlag, 1998, 189
- Römpp-Lexikon Lacke und Druckfarben. Georg Thieme Verlag, 1998, 249-250
- Römpp-Lexikon Lacke und Druckfarben. Georg Thieme Verlag, 1998, 451